# EUROPEAN PATENT SPECIFICATION

(11) **EP 4 209 989 B1**
(45) Date of publication and mention of the grant of the patent: **01.07.2026**
(21) Application number: 21886736.4
(22) Date of filing: 26.10.2021
(51) Int. Cl.: G06T 5/00, G06T 3/40, G06N 3/08, G06N 3/09, G06N 3/0464, G06N 3/04, G06T 5/94, G06T 5/90, G06T 5/60, G06T 5/92, H04N 23/83, G06N 3/045

(54) **DEVICE AND METHOD FOR GENERATING IMAGE IN WHICH SUBJECT HAS BEEN CAPTURED**
VORRICHTUNG UND VERFAHREN ZUR ERZEUGUNG EINES BILDES MIT DARIN AUFGENOMMENEM SUBJEKT
DISPOSITIF ET PROCÉDÉ DE GÉNÉRATION D'IMAGE DANS LAQUELLE UN SUJET A ÉTÉ CAPTURÉ

(30) Priority: 27.10.2020 KR 20200140682; 11.11.2020 KR 20200149890
(43) Date of publication of application: 12.07.2023
(73) Proprietor: Samsung Electronics Co., Ltd., Suwon-si, Gyeonggi-do 16677 (KR)
(72) Inventor: DINH, Quockhanh, Suwon-si, Gyeonggi-do 16677 (KR); JIN, Kyonghwan, Suwon-si, Gyeonggi-do 16677 (KR); PARK, Youngo, Suwon-si, Gyeonggi-do 16677 (KR); CHOI, Kwangpyo, Suwon-si, Gyeonggi-do 16677 (KR)
(74) Representative: Gulde & Partner
(86) International application number: PCT/KR2021/015056
(87) International publication number: WO 2022/092742

(56) References cited:
- WO-A1-2020/187424
- CN-A- 111 126 273
- KR-A- 20170 078 516
- KR-A- 20180 055 573
- KR-A- 20200 009 922
- KR-B1- 102 029 852
- US-A1- 2019 114 743
- US-A1- 2020 089 994

## Description

### Technical Field

The disclosure relates to a device and method for generating an output image in which a subject has been captured by using an artificial intelligence (Al) model.

### Background Art

Consumer demand related to mobile devices has diversified due to the widespread use of such mobile devices and the development of communication network technology, and thus various types of additional devices are mounted in the mobile devices. In addition, the mobile devices are reduced in size and a camera function for capturing a subject is supported by the mobile devices.

However, due to the reduction in size of the mobile devices, a high-performance camera sensor may not be easily mounted in the mobile devices, and the mobile devices require a lot of resources to process raw data.

As such, a technology for generating images having various image features by using a camera sensor of a mobile device is increasingly required and, furthermore, an artificial intelligence (Al) technology capable of generating high dynamic range (HDR) images is also required.

Documents (CN111126273A, WO 2020/187424 A1, US 2019/114743 A1) relate to conventional image processing methods using trained Al models.

### Disclosure

### Technical Problem

An embodiment of the disclosure may provide a device and method capable of generating an output image in which a subject has been captured by using an artificial intelligence (Al) model.

An embodiment of the disclosure may also provide a device and method capable of obtaining an output image in which a subject has been captured by inputting, to an Al model, a raw image generated from a camera sensor.

An embodiment of the disclosure may also provide a device and method capable of obtaining an output image in which a subject has been captured by using an Al model for generating a tone map.

An embodiment of the disclosure may also provide a device and method capable of obtaining an output image in which a subject has been captured from a raw image by sequentially using a plurality of Al models.

An embodiment of the disclosure may also provide a device and method capable of obtaining a live view image for capturing a subject and an output image in which the subject has been captured by using at least some of a plurality of Al models trained together.

An embodiment of the disclosure may also provide a device and method capable of obtaining a live view image for capturing a subject and an output image in which a subject has been captured by using an Al model trained in relation to at least one of a preference of a user or a situation in which the subject is captured.

### Technical Solution

The present invention is defined by the appended set of claims. According to a first aspect of the disclosure, there is provided a method according to claim 1.

According to a second aspect of the disclosure, there is provided a device according to claim 11.

According to a third aspect of the disclosure, there is provided a computer-readable recording medium according to claim 12.

### Description of Drawings

FIG. 1 is a view showing an example in which a device 1000 generates an output image by capturing a subject, according to an embodiment of the disclosure.
FIG. 2 is a block diagram of the device 1000 according to an embodiment of the disclosure.
FIG. 3 is a view for describing a process of generating an output image in which a subject has been captured from a raw image, according to an embodiment of the disclosure.
FIG. 4A is a view for describing a process, performed by the device 1000, of generating a tone map from a raw image 30, according to an embodiment of the disclosure.
FIG. 4B is a view for describing a process, performed by the device 1000, of extracting features from the raw image 30, according to an embodiment of the disclosure.
FIG. 4C is a view for describing a process, performed by the device 1000, of modifying feature images, according to an embodiment of the disclosure.
FIG. 4D is a view for describing a process, performed by the device 1000, of generating an output image from modified feature images, according to an embodiment of the disclosure.
FIG. 5 is a view showing an example of a structure of a feature extraction model 1732, according to an embodiment of the disclosure.
FIG. 6 is a flowchart of a method, performed by the device 1000, of generating an output image by capturing a subject, according to an embodiment of the disclosure.
FIG. 7 is a view showing an example of training an Al model 1620, according to an embodiment of the disclosure.
FIG. 8 is a flowchart of a method of training the Al model 1620, according to an embodiment of the disclosure.
FIG. 9 is a flowchart of a method, performed by the device 1000, of outputting a live view image, according to an embodiment of the disclosure.
FIG. 10A is a view showing an example of deactivating a tone map generation model 1731 in an Al model 1730 to generate a live view image, according to an embodiment of the disclosure.
FIG. 10B is a view showing an example of deactivating a feature extraction model 1732 and an image regression model 1734 in the Al model 1730 to generate a live view image, according to an embodiment of the disclosure.
FIG. 10C is a view showing an example of deactivating the tone map generation model 1731, the feature extraction model 1732, and the image regression model 1734 in the Al model 1730 to generate a live view image, according to an embodiment of the disclosure.
FIG. 11 is a flowchart of a method, performed by the device 1000, of updating the Al model 1620 by receiving a retrained AI model 1620 from a server (not shown), according to an embodiment of the disclosure.
FIG. 12 is a flowchart of a method, performed by the device 1000, of retraining and updating the Al model 1620, according to an embodiment of the disclosure.
FIG. 13A is a view showing an example of a graphical user interface (GUI) for camera settings of the device 1000 for capturing a subject, according to an embodiment of the disclosure.
FIG. 13B is a view showing an example of a GUI for camera settings of the device 1000 for capturing a subject, according to an embodiment of the disclosure.

### Mode for Invention

Hereinafter, the disclosure will be described in detail by explaining embodiments thereof with reference to the attached drawings in such a manner that it may easily be carried out by one of ordinary skill in the art. The disclosure may, however, be embodied in many different forms and should not be construed as being limited to the embodiments set forth herein. In the drawings, parts not related to the disclosure are not illustrated for clarity of explanation, and like elements are denoted by like reference numerals throughout.

Throughout the specification, when an element is referred to as being "connected to" another element, the element can be "directly connected to" the other element or be "electrically connected to" the other element via an intervening element. The terms "comprises", "comprising", "includes" and/or "including", when used herein, specify the presence of stated elements, but do not preclude the presence or addition of one or more other elements.

As used herein, an artificial intelligence (AI) processing unit may be a processing unit configured to process an image by using Al technology. For example, the Al processing unit is a processing unit designed for image processing using an Al model, and may be a processing unit dedicated to image processing. Alternatively, for example, the Al processing unit may be implemented by configuring a neural processing unit (NPU) for image processing using an Al model.

As used herein, an Al model is a model trained to generate, from a raw image, an output image which is a result of capturing a subject, and may include a plurality of sub Al models. The plurality of sub Al models included in the Al model may include a tone map generation model, a feature extraction model, an image modification model, and an image regression model. The tone map generation model may be an Al model trained to generate a tone map from the raw image, the feature extraction model may be an Al model trained to extract features in the raw image input to the feature extraction model, the image modification model may be an Al model trained to modify feature images output from the feature extraction model, and the image regression model may be an Al model trained to generate an output image in which the subject has been captured from the feature images.

As used herein, a tone map may be map data including information for scaling brightness of pixels in the raw image. The tone map may be map data for at least one of local tone mapping for scaling brightness of pixels in a part of the raw image, or global tone mapping for scaling brightness of the entirety of the raw image.

As used herein, a live view image may be an image output on a screen of a display such that a user who desires to capture the subject may check the subject to be captured.

Reference will now be made in detail to embodiments, examples of which are illustrated in the accompanying drawings.

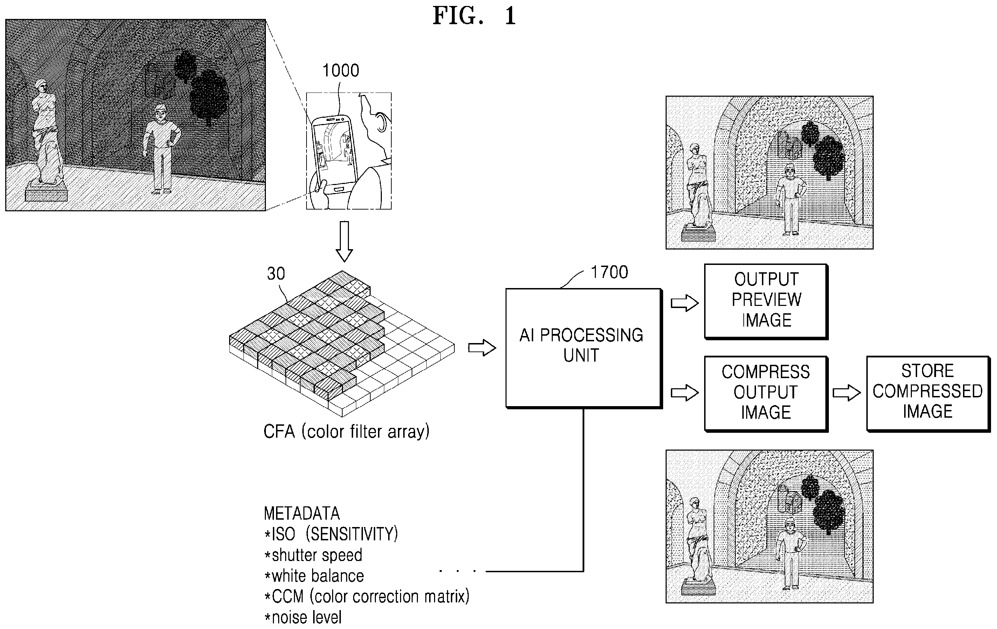

FIG. 1 is a view showing an example in which a device 1000 generates an output image by capturing a subject, according to an embodiment of the disclosure.

Referring to FIG. 1, the device 1000 may capture the subject by using an Al model for generating an output image in which the subject has been captured. The device 1000 may include an Al processing unit 1700 configured to generate an output image in which the subject has been captured, and the Al processing unit 1700 of the device 1000 may input, to the Al model, a raw image generated using a camera sensor in the device 1000 and a preset setting value for image modification, and obtain an output image output from the Al model. The Al model used by the Al processing unit 1700 is a model trained to generate, from the raw image, an output image which is a result of capturing the subject of the raw image, and may include a plurality of sub Al models. The plurality of sub Al models included in the Al model may include an Al model for generating a tone map, an Al model for extracting features of an image, an Al model for modifying feature images representing the extracted features, and an Al model for generating the output image.

The Al processing unit 1700 of the device 1000 may generate a live view image for capturing the subject, by using at least one of the plurality of sub Al models.

The device 1000 may be a smartphone, a personal computer (PC), a tablet PC, a smart television (TV), a cellular phone, a personal digital assistant (PDA), a laptop computer, a media player, a global positioning system (GPS), an e-book reader, a digital broadcast receiver, a navigation system, a kiosk, a digital camera, a home appliance, or another mobile or non-mobile computing device, but is not limited thereto. The device 1000 may be a wearable device having a communication function and a data processing function, e.g., a watch, glasses, a hairband, or a ring. However, the device 1000 is not limited thereto, and may include any type of device capable of capturing the subject.

The device 1000 may communicate with a server (not shown) through a network to obtain an output image in which the subject has been captured. The network may be implemented as a wired network such as a local area network (LAN), a wide area network (WAN), or a value added network (VAN), or any wireless network such as a mobile radio communication network or a satellite communication network. The network may include a combination of two or more of a LAN, a WAN, a VAN, a mobile radio communication network, and a satellite communication network, comprehensively refers to a data communication network capable of enabling seamless communication between network entities, and may include a wired internet, a wireless internet, or a mobile wireless communication network. The wireless communication may include, for example, wireless LAN (or Wi-Fi), Bluetooth, Bluetooth low energy (BLE), Zigbee, Wi-Fi direct (WFD), ultra-wideband (UWB), Infrared Data Association (IrDA), or near field communication (NFC), but is not limited thereto.

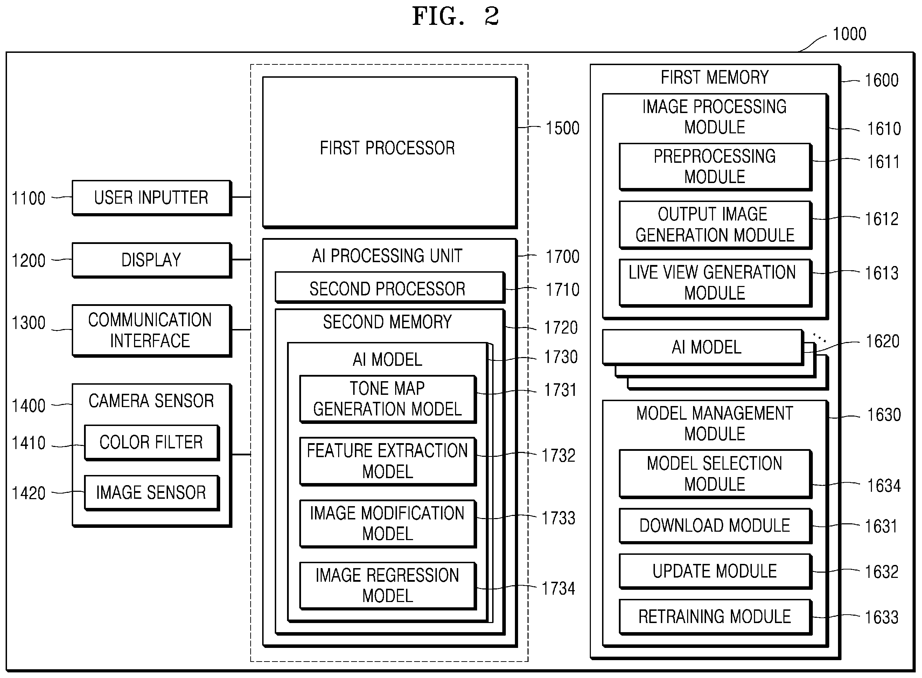

FIG. 2 is a block diagram of the device 1000 according to an embodiment of the disclosure.

Referring to FIG. 2, the device 1000 according to an embodiment of the disclosure may include a user inputter 1100, a display 1200, a communication interface 1300, a camera sensor 1400, a first processor 1500, a first memory 1600, and the Al processing unit 1700. The Al processing unit 1700 may include a second processor 1710 configured to perform image processing by using Al technology, and a second memory 1720. For example, the Al processing unit 1700 is a processing unit designed for image processing using an Al model, and may be a processing unit dedicated to image processing. Alternatively, for example, the Al processing unit 1700 may be implemented by configuring a neural processing unit (NPU) for image processing using an Al model.

The user inputter 1100 refers to a means through which a user inputs data for controlling the device 1000. For example, the user inputter 1100 may include at least one of a keypad, a dome switch, a touchpad (e.g., a capacitive overlay, resistive overlay, infrared beam, surface acoustic wave, integral strain gauge, or piezoelectric touchpad), a jog wheel, or a jog switch, but is not limited thereto. The user inputter 1100 may receive, from a user of the device 1000, a user input for capturing a photo.

The display 1200 displays information processed in the device 1000. For example, the display 1200 may display a graphical user interface (GUI) for capturing a photo, a live view image, and an output image output as a result of capturing a photo.

Meanwhile, when the display 1200 is layered with a touchpad to configure a touchscreen, the display 1200 may be used not only as an output device but also as an input device. The display 1200 may include at least one of a liquid crystal display (LCD), a thin film transistor-liquid crystal display (TFT-LCD), an organic light-emitting diode (OLED), a flexible display, a three-dimensional (3D) display, or an electrophoretic display. Depending on implementation of the device 1000, the device 1000 may include two or more displays 1200.

The communication interface 1300 may include one or more elements capable of enabling communication with another device (not shown) and a server (not shown). For example, the communication interface 1300 may include a short-range wireless communication unit, a mobile communication unit, and a broadcast receiver.

The short-range wireless communication unit may include a Bluetooth communication unit, a Bluetooth low energy (BLE) communication unit, a near field communication (NFC) unit, a wireless local area network (WLAN) communication unit, a Zigbee communication unit, an Infrared Data Association (IrDA) communication unit, a Wi-Fi direct (WFD) communication unit, an ultra-wideband (UWB) communication unit, or an Ant+ communication unit, but is not limited thereto. The mobile communication unit transmits and receives wireless signals to and from at least one of a base station, an external device, or a server on a mobile communication network. Herein, the wireless signals may include various types of data in accordance with transmission and reception of voice call signals, video call signals, or text/multimedia messages. The broadcast receiver receives broadcast signals and/or broadcast information from outside through broadcast channels. The broadcast channels may include satellite channels and terrestrial channels. Depending on an embodiment, the device 1000 may not include the broadcast receiver.

The communication interface 1300 may transmit and receive, to or from another device (not shown) and a server (not shown), information required to manage an Al model 1620 for capturing a photo.

The camera sensor 1400 may include a color filter 1410 and an image sensor 1420, and generate a raw image corresponding to a subject under the control of the first or second processor 1500 or 1710 described below. The camera sensor 1400 may generate the raw image corresponding to the subject under the control of the second processor 1710 based on a control signal of the first processor 1500, or under the independent control of the second processor 1710. For example, when the second processor 1710 is included in the camera sensor 1400, and when the first processor 1500 sends a control request signal for shooting to the camera sensor 1400, the second processor 1710 in the camera sensor 1400 may receive the control request signal and generate the raw image by controlling the camera sensor 1400. Alternatively, for example, when the second processor 1710 is provided outside the camera sensor 1400, and when the first processor 1500 sends a control request signal for shooting to the second processor 1710, the second processor 1710 may receive the control request signal and generate the raw image by controlling the camera sensor 1400. Alternatively, for example, the first processor 1500 may obtain the raw image by controlling the camera sensor 1400, and provide the obtained raw image to the second processor 1710.

Because an image obtained by the image sensor 1420 such as a complementary metal-oxide semiconductor (CMOS) or a charge-coupled device (CCD) is a monochrome image, the color filter 1410 configured to pass only a specific frequency band in the visible light region may be provided at a front end of the image sensor 1420, and a color image may be obtained from light provided through the color filter 1410 to the image sensor 1420. The color filter 1410 passes only light of a specific frequency band in the light provided from the subject. The color filter 1410 may be divided into a plurality of regions corresponding to a plurality of colors, and each of the plurality of regions may pass only light of the same frequency band as one of three colors such as red, green, and blue. The light passing through the color filter 1410 is provided to the image sensor 1420 such as a CMOS or a CCD, and the image sensor 1420 may convert the received light into an electrical signal. For example, the electrical signal converted by the image sensor 1420 may include red, green, and blue values, and the raw image including an array of red, green, and blue values may be generated. The raw image may have a pattern based on an array pattern of the color filter 1410, e.g., any one pattern from among a Bayer pattern, a RGBE pattern, an RYYB pattern, a CYYM pattern, a CYGM pattern, a RGBW Bayer pattern, and an X-trans pattern.

The first memory 1600 may store programs for processing and control by at least one of the first or second processor 1500 or 1710 described below, and store data input to or to be output from the device 1000.

The first memory 1600 may include at least one type of storage medium from among flash memory, a hard disk, a multimedia card micro, a memory card (e.g., a secure digital (SD) or extreme digital (XD) memory card), random access memory (RAM), static random access memory (SRAM), read-only memory (ROM), electrically erasable programmable read-only memory (EEPROM), programmable read-only memory (PROM), magnetic memory, a magnetic disk, and an optical disc.

The programs stored in the first memory 1600 may be classified into a plurality of modules depending on functions thereof, and include, for example, an image processing module 1610, at least one Al model 1620, and a model management module 1630. The image processing module 1610 may include a preprocessing module 1611, an output image generation module 1612, and a live view generation module 1613, the AI model 1620 may include a plurality of sub Al models such as a tone map generation model, a feature extraction model, an image modification model, and an image regression model, and the model management module 1630 may include a model selection module 1634, a download module 1631, an update module 1632, and a retraining module 1633. The first processor 1500 normally controls overall operation of the device 1000. For example, the first processor 1500 may control the user inputter 1100, the display 1200, the communication interface 1300, the camera sensor 1400, and the first memory 1600 by executing the programs stored in the first memory 1600. The first processor 1500 may include one or more processors. In this case, the one or more processors may include at least one of a general-purpose processor (e.g., a central processing unit (CPU), an application processor (AP), or a digital signal processor (DSP)) or a dedicated graphics processor (e.g., a graphics processing unit (GPU) or a vision processing unit (VPU)).

The Al processing unit 1700 may include the second processor 1710 and the second memory 1720. The second processor 1710 and the second memory 1720 may be designed to perform image processing by using an Al model, but are not limited thereto.

The second memory 1720 may store programs for processing and control by the second processor 1710. For example, the second memory 1720 may store an Al model 1730 selected from among one or more Al models 1620 stored in the first memory 1600, and the Al model 1730 stored in the second memory 1720 may be executed by the second processor 1710. The Al model 1730 stored in the second memory 1720 may include a plurality of sub Al models such as a tone map generation model 1731, a feature extraction model 1732, an image modification model 1733, and an image regression model 1734.

The second memory 1720 may include at least one type of storage medium from among flash memory, a hard disk, a multimedia card micro, a memory card (e.g., a SD or XD memory card), RAM, SRAM, ROM, EEPROM, PROM, magnetic memory, a magnetic disk, and an optical disc.

The image processing module 1610 stored in the first memory 1600 may be executed by at least one of the first or second processor 1500 or 1710 to generate a live view image for capturing the subject and an output image in which the subject has been captured. The live view image may be an image output on the display 1200 such that a user who desires to capture the subject may check the subject to be captured, and the output image in which the subject has been captured may be an image stored in the device 1000 as a result of capturing the subject.

The first processor 1500 may generate the raw image corresponding to the subject by executing the preprocessing module 1611 stored in the first memory 1600. When a user input for capturing the subject received, the first processor 1500 may generate the raw image based on light provided through the color filter 1410 to the image sensor 1420 of the camera sensor 1400 at a timing when the user input is received. The first processor 1500 may generate the raw image including an array of, for example, red, green, and blue values.

The first processor 1500 may generate the output image in which the subject has been captured by executing the output image generation module 1612. The first processor 1500 may request the second processor 1710 to generate the output image by using the raw image. As such, the second processor 1710 may input the raw image to the Al model 1730 including the tone map generation model 1731, the feature extraction model 1732, the image modification model 1733, and the image regression model 1734, and obtain an output image output from the Al model 1730. The second processor 1710 may obtain a tone map by inputting the raw image to the tone map generation model 1731, obtain a plurality of feature images related to a plurality of features of the subject by inputting the generated tone map and the raw image to the feature extraction model 1732, modify the plurality of feature images by inputting the plurality of feature images to the image modification model 1733, and obtain the output image to be stored in the device 1000 by inputting the plurality of modified feature images to the image regression model 1734. The output image output from the Al model 1730 may be displayed on the display 1200 and stored in the first memory 1600 by the first processor 1500.

The Al model 1730 related to a situation in which the user captures the subject may be selected from among one or more Al models 1620 stored in the first memory 1600 and loaded into the second memory 1720, and a description thereof will be provided below.

To generate a tone map used to scale brightness of the red, green, and blue values in the raw image, the second processor 1710 may input the raw image to the tone map generation model 1731. For example, when the second processor 1710 is included in the camera sensor 1400, and when the first processor 1500 sends a control request signal for shooting to the camera sensor 1400, the second processor 1710 in the camera sensor 1400 may receive the control request signal, generate the raw image by controlling the camera sensor 1400, and input the raw image to the tone map generation model 1731. Alternatively, for example, when the second processor 1710 is provided outside the camera sensor 1400, and when the first processor 1500 sends a control request signal for shooting to the second processor 1710, the second processor 1710 may receive the control request signal, generate the raw image by controlling the camera sensor 1400, and input the raw image to the tone map generation model 1731. For example, the first processor 1500 may obtain the raw image by controlling the camera sensor 1400, provide the obtained raw image to the second processor 1710, and the second processor 1710 may input the raw image to the tone map generation model 1731. The tone map may be map data including information for scaling brightness of pixels in the raw image. The tone map may be map data for at least one of local tone mapping for scaling brightness of pixels in a part of the raw image, or global tone mapping for scaling brightness of the entirety of the raw image. For example, the tone map may be generated to scale brightness of a dark region more than that of a bright region in the raw image. The tone map generation model 1731 may be an Al model trained to generate a tone map from the raw image. The tone map generation model 1731 may include a plurality of neural network layers, and each of the plurality of neural network layers may have a plurality of weight values and perform neural network computation through computation between a computation result of a previous layer and the plurality of weight values. The plurality of weight values of the plurality of neural network layers may be optimized by a result of training the tone map generation model 1731 and, for example, the tone map generation model 1731 may be trained together with the feature extraction model 1732, the image modification model 1733, and the image regression model 1734. For example, the tone map generation model 1731 may include a convolutional neural network (CNN), but is not limited thereto.

The second processor 1710 may combine and input the raw image and the tone map to the feature extraction model 1732, and obtain a plurality of feature images output from the feature extraction model 1732. For example, the second processor 1710 may scale brightness of pixels in the raw image by using the tone map, and input the brightness-scaled raw image to the feature extraction model 1732. The raw image input to the feature extraction model 1732 may be scaled to increase brightness values of pixels in a dark part, and thus the subject positioned at the dark part in the raw image may be more effectively identified.

The feature extraction model 1732 may extract features in the raw image input to the feature extraction model 1732. The plurality of feature images separately representing a plurality of features in the raw image may be output from the feature extraction model 1732. For example, the plurality of feature images may include a feature image representing features related to edges in the raw image, a feature image representing features related to lines in the raw image, a feature image representing features related to spaces in the raw image, a feature image representing features related to shapes and depths of objects in the raw image, a feature image representing features related to people in the raw image, and a feature image representing features related to things in the raw image, but are not limited thereto.

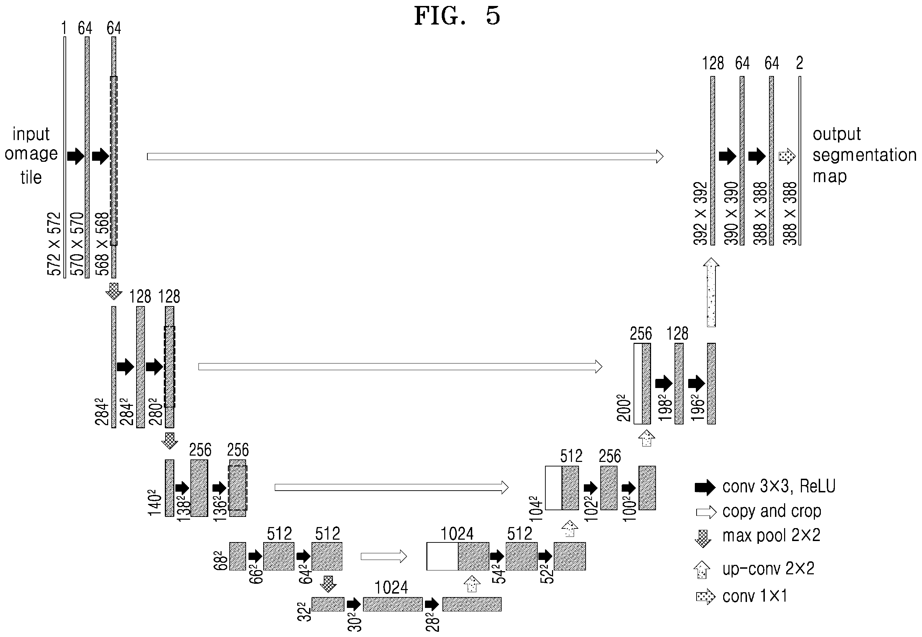

The feature extraction model 1732 may be an Al model trained to extract features in the raw image input to the feature extraction model 1732. The feature extraction model 1732 may include a plurality of neural network layers, and each of the plurality of neural network layers may have a plurality of weight values and perform neural network computation through computation between a computation result of a previous layer and the plurality of weight values. The plurality of weight values of the plurality of neural network layers may be optimized by a result of training the feature extraction model 1732 and, for example, the feature extraction model 1732 may be trained together with the tone map generation model 1731, the image modification model 1733, and the image regression model 1734. For example, the feature extraction model 1732 may be implemented by a U-NET having an end-to-end fully convolutional network architecture as described below in relation to FIG. 5, but is not limited thereto.

The second processor 1710 may modify the feature images output from the feature extraction model 1732. The second processor 1710 may modify the feature images, based on preset settings related to image attributes. For example, the second processor 1710 may modify the feature images by using the image modification model 1733, based on preset criteria for white balance adjustment and color correction. The second processor 1710 may input, to the image modification model 1733, the feature images output from the feature extraction model 1732 and preset attribute values related to the image attributes, and obtain modified feature images output from the image modification model 1733.

In this case, the second processor 1710 may determine image attributes for modifying the feature images. For example, the image attributes for modifying the feature images may be determined based on a shooting environment of the device 1000. The second processor 1710 may obtain sensing data representing an ambient environment of the device 1000 at a timing when the subject is captured, through the camera sensor 1400, and input a white balance matrix value and color correction matrix value for modifying the feature images, to the image modification model 1733 together with the feature images, based on criteria preset according to the sensing data.

Alternatively, for example, the first processor 1500 may display a GUI for camera settings on the device 1000, and preset settings for white balance adjustment and color correction, based on a user input through the GUI.

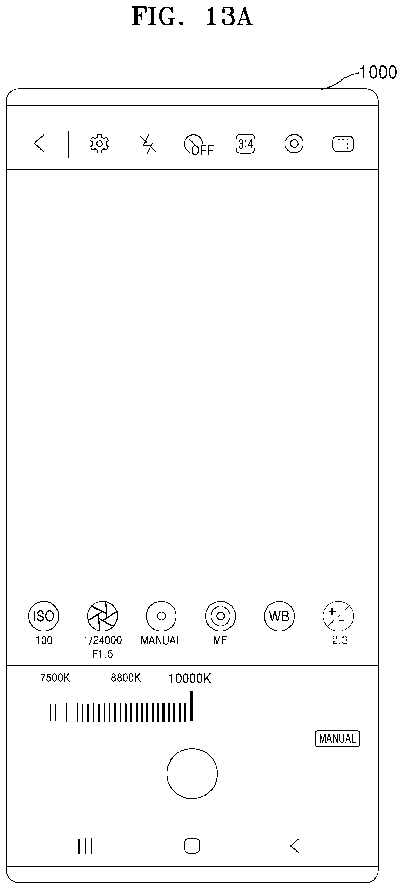

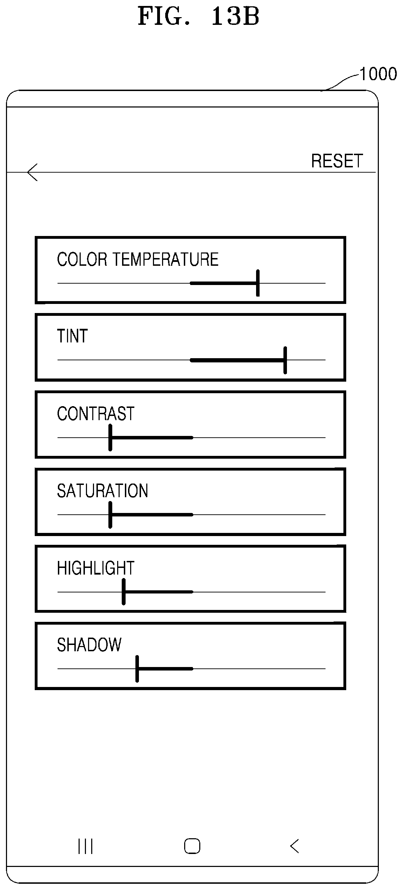

For example, the device 1000 may display, on the display 1200 as shown in FIGS. 13A and 13B, a GUI for camera settings of the device 1000 which captures the subject. As such, the user may input setting values related to ISO, shutter speed, white balance, color temperature, tint, contrast, saturation, highlight effect, shadow effect, etc. to the device 1000 through the GUI displayed on the display 1200.

In this case, the first processor 1500 may extract a white balance matrix value and a color correction matrix value from the first memory 1600, based on criteria preset by the user, and input the extracted white balance matrix value and color correction matrix value to the image modification model 1733 together with the feature images.

The image modification model 1733 may be an Al model trained to modify image attributes of the feature images input to the image modification model 1733. The image modification model 1733 may include a plurality of neural network layers, and each of the plurality of neural network layers may have a plurality of weight values and perform neural network computation through computation between a computation result of a previous layer and the plurality of weight values. The plurality of weight values of the plurality of neural network layers may be optimized by a result of training the image modification model 1733 and, for example, the image modification model 1733 may be trained together with the tone map generation model 1731, the feature extraction model 1732, and the image regression model 1734.

Meanwhile, the white balance matrix value and the color correction matrix value are input to the image modification model 1733 in the above description, but are not limited thereto. A plurality of Al models 1620 may be separately trained based on settings related to white balance adjustment and color correction. In this case, to generate the output image, the Al model 1730 corresponding to a certain setting related to white balance adjustment and color correction may be loaded into the second memory 1720 and used by the second processor 1710. Although the white balance matrix value and the color correction matrix value are not input to the Al model 1730 loaded in the second memory 1720, the output image considering the certain setting related to white balance adjustment and color correction may be output from the Al model 1730 loaded in the second memory 1720.

The second processor 1710 may input the modified feature images to the image regression model 1734, and obtain an output image output from the image regression model 1734. The output image output from the image regression model 1734 may be an image to be stored in the device 1000 as a result of capturing the subject.

When a user input for capturing the subject is received, the image output through the Al model 1730 may be compressed based on certain criteria, and stored in the first memory 1600, but is not limited thereto.

The image regression model 1734 may be an Al model trained to generate an output image in which the subject has been captured from the feature images. The image regression model 1734 may include a plurality of neural network layers, and each of the plurality of neural network layers may have a plurality of weight values and perform neural network computation through computation between a computation result of a previous layer and the plurality of weight values. The plurality of weight values of the plurality of neural network layers may be optimized by a result of training the image regression model 1734 and, for example, the image regression model 1734 may be trained together with the tone map generation model 1731, the feature extraction model 1732, and the image modification model 1733. For example, the image regression model 1734 may include a CNN, but is not limited thereto.

The first processor 1500 may generate the live view image by executing the live view generation module 1613. When a user input for activating a camera function to capture the subject is received, the first processor 1500 may generate the live view image and display the generated live view image on the display 1200. For example, when a user input for executing a camera application installed in the device 1000 is received, the first processor 1500 may execute the camera application, generate the live view image, and display the live view image on the display 1200 such that the user may check the subject to be captured.

When the camera function of the device 1000 is activated, the first processor 1500 may generate the raw image used to generate the live view image, based on light input through the camera sensor 1400. To reduce a time taken to generate the live view image, the second processor 1710 may not use at least one of the models in the Al model 1730. The first processor 1500 may not use at least one of the tone map generation model 1731, the feature extraction model 1732, the image modification model 1733, or the image regression model 1734. In this case, a model not to be used to generate the live view image from among the tone map generation model 1731, the feature extraction model 1732, and the image regression model 1734 may be preset.

The second processor 1710 may input the raw image to the Al model 1730 including at least one deactivated model, and provide the live view image output from the Al model 1730, to the first processor 1500, and the first processor 1500 may display the live view image on the display 1200. In this case, the Al model 1730 may be pre-trained to output a satisfactory live view image while at least one of the models in the Al model 1730 is deactivated.

As such, when the camera application of the device 1000 is executed to activate the camera function, the live view image generated using a small resource of the device 1000 may be displayed on a screen of the device 1000 and, when a capture input of the user who desires to capture the subject is received, the output image generated through the Al model 1730 from the raw image generated at a timing when the capture input is received may be stored in the first memory 1600.

The first processor 1500 may select the Al model 1730 to be used by the second processor 1710, and update the Al model 1620 stored in the first memory 1600, by executing the model management module 1630.

The first processor 1500 may select the Al model 1730 to be used by the second processor 1710 from among one or more Al models 1620 stored in the first memory 1600, by executing the model selection module 1634. The Al model 1730 selected by the first processor 1500 may be loaded into the second memory 1720 of the Al processing unit 1700.

The first memory 1600 may store a plurality of Al models 1620, and the plurality of Al models 1620 may be Al models separately trained based on a plurality of situations. For example, the plurality of Al models 1620 may be Al models trained based on situations related to at least one of camera filters, camera lenses, camera manufacturers, device models, a plurality of images captured in a burst mode, shooting environments, subject types, or image attributes.

For example, the Al models trained based on camera filters may include an Al model trained based on images captured using an unsharp mask, an Al model trained based on images captured using an contrast adjustment mask, and an Al model trained based on images captured using a color filter mask, but are not limited thereto. For example, the Al models trained based on camera lenses may include an Al model trained based on images captured using a telephoto lens, an Al model trained based on images captured using a wide-angle lens, and an Al model trained based on images captured using a fisheye lens, but are not limited thereto. For example, the Al models trained based on camera manufacturers may include an Al model trained based on images captured using a camera from manufacturer A, an Al model trained based on images captured using a camera from manufacturer B, and an Al model trained based on images captured using a camera from manufacturer C, but are not limited thereto. For example, the Al models trained based on devices may include an Al model trained based on images captured using Galaxy S10, an Al model trained based on images captured using Galaxy S20, and an Al model trained based on images captured using Galaxy Note 20, but are not limited thereto.

For example, the Al models trained based on shooting environments may include an Al model trained based on images captured in an indoor environment, an Al model trained based on images captured in an outdoor environment, and an Al model trained based on images captured in a specific luminance range, but are not limited thereto. For example, the Al models trained based on subject types may include an Al model trained based on images of people, an Al model trained based on images of food, and an Al model trained based on images of buildings, but are not limited thereto. For example, the Al models trained based on image attributes may include an Al model trained based on images captured by applying a specific white balance value, an Al model trained based on images captured by applying a specific ISO value, and an Al model trained based on images captured at a specific shutter speed, but are not limited thereto.

When the camera application of the device 1000 is executed to activate the camera function, the first processor 1500 may identify a situation related to at least one of camera filters, camera lenses, camera manufacturers, device models, a plurality of images captured in a burst mode, shooting environments, subject types, or image attributes by executing the model selection module 1634. For example, the first processor 1500 may identify at least one situation, based on sensing values obtained by sensing an ambient environment of the device 1000, and setting values of the camera application.

The first processor 1500 may display a certain GUI for camera settings on the display 1200, and identify at least one situation, based on values set based on a user input through the GUI. For example, the first processor 1500 may display, on the display 1200 as shown in FIGS. 13A and 13B, a GUI for camera settings of the device 1000 which captures the subject. As such, the user may input setting values related to ISO, shutter speed, white balance, color temperature, tint, contrast, saturation, highlight effect, shadow effect, etc. to the device 1000 through the GUI displayed on the display 1200.

The first processor 1500 may extract the Al model 1730 corresponding to the identified at least one situation from among one or more Al models 1620 stored in the first memory 1600, and load the same into the second memory 1720. For example, the user may set setting values related to ISO, white balance, color temperature, tint, saturation, contrast, etc. through the GUI displayed on the display 1200 of the device 1000, and the device 1000 may select the Al model 1730 corresponding to the setting values set by the user from among the plurality of Al models 1620 stored in the first memory 1600, and load the selected Al model 1730 into the second memory 1720.

The first processor 1500 may extract the Al model 1730 corresponding to a preference of the user, from the first memory 1600 to load the same into the second memory 1720, based on information about at least one of, for example, a camera filter used more than a certain number of times by the user, a camera lens used more than a certain number of times by the user, a manufacturer of a camera used more than a certain number of times by the user, a device model used more than a certain number of times by the user, a shooting environment provided more than a certain number of times, a type of subject captured more than a certain number of times by the user, or image attributes used more than a certain number of times by the user.

The first processor 1500 may display, for example, preset images and load, into the second memory 1720, the Al model 1730 trained to output an image having features similar to those of at least one image selected by the user from among the displayed images. For example, when the user often selects an edge-enhanced image, the Al model 1730 trained to output an edge-enhanced image may be loaded into the second memory 1720.

When the Al model 1730 corresponding to the identified at least one situation is not stored in the first memory 1600, the first processor 1500 may request the Al model 1730 from a server (not shown), and receive the Al model 1730 from the server (not shown) to store the same in the second memory 1720.

The first processor 1500 may receive a retrained AI model 1620 or data for retraining the Al model 1620, from the server (not shown) by executing the download module 1631. The first processor 1500 may request the retrained Al model 1620 from the server (not shown). The Al model 1620 may be retrained by the server (not shown), and the server (not shown) may provide, to the device 1000, notification information indicating that the retrained Al model 1620 is present. The first processor 1500 may display, on the screen, the notification information received from the server (not shown), and receive a user input for updating the Al model 1620. The first processor 1500 may provide information about photo attributes preferred by the user, to the server (not shown) to request the retrained Al model 1620 from the server (not shown). The information about the photo attributes preferred by the user may include information about at least one of, for example, a camera filter used more than a certain number of times by the user, a camera lens used more than a certain number of times by the user, a manufacturer of a camera used more than a certain number of times by the user, a device model used more than a certain number of times by the user, a shooting environment provided more than a certain number of times, a type of subject captured more than a certain number of times by the user, or image attributes used more than a certain number of times by the user. When the first processor 1500 has provided, to the server (not shown), the information about the photo attributes preferred by the user, the first processor 1500 may download, from the server (not shown), the Al model 1620 retrained in relation to the photo attributes preferred by the user. The first processor 1500 may update the Al model 1620 in the device 1000 by replacing the Al model 1620 in the device 1000 with the retrained Al model 1620 received from the server (not shown), by executing the update module 1632.

The first processor 1500 may download a reference raw image for retraining and a reference image corresponding to the reference raw image, from the server (not shown) by executing the download module 1631. The reference image may be an image generated from the reference raw image for retraining. The first processor 1500 may request and receive, from the server (not shown), the reference raw image and the reference image for retraining the Al model 1620. In this case, the first processor 1500 may provide, to the server (not shown), the information about the photo attributes preferred by the user. The information about the photo attributes preferred by the user may include information about at least one of, for example, a camera filter used more than a certain number of times by the user, a camera lens used more than a certain number of times by the user, a manufacturer of a camera used more than a certain number of times by the user, a device model used more than a certain number of times by the user, a shooting environment provided more than a certain number of times, a type of subject captured more than a certain number of times by the user, or image attributes used more than a certain number of times by the user. In this case, the server (not shown) may provide, to the device 1000, the reference image and the reference raw image generated in relation to the photo attributes preferred by the user.

The first processor 1500 may obtain the reference raw image for retraining and the reference image corresponding to the reference raw image, by executing the retraining module 1633, and the second processor 1710 may retrain the Al model 1620. The second processor 1710 may use the reference image received from the server (not shown), as a ground truth (GT) image, and retrain the Al model 1620 by inputting the reference raw image received from the server (not shown), to the Al model 1620 and comparing an output image output from the Al model 1620, with the reference image.

Meanwhile, the device 1000 generates the output image in which the subject has been captured by using the Al model 1620 in the device 1000 in the above description, but is not limited thereto. The device 1000 may generate the output image in which the subject has been captured together with the server (not shown). For example, the device 1000 may generate the raw image and transmit the generated raw image to the server (not shown) to request the output image from the server (not shown). The device 1000 may provide the raw image and setting information for image modification together to the server (not shown). In this case, the Al model 1620 may be included in the server (not shown), and the server (not shown) may generate the output image from the raw image by using the Al model 1620 in the server (not shown). The server (not shown) may provide the generated output image to the device 1000.

Alternatively, for example, the device 1000 may provide the raw image and the tone map output from the tone map generation model 1731, to the server (not shown) to request the output image from the server (not shown). The device 1000 may provide the raw image, the tone map, and the setting information for image modification together to the server (not shown). In this case, the feature extraction model 1732, the image modification model 1733, and the image regression model 1734 in the Al model 1620 may be included in the server (not shown), and the server (not shown) may generate the output image by using the feature extraction model 1732, the image modification model 1733, and the image regression model 1734 in the server (not shown). The server (not shown) may provide the generated output image to the device 1000.

Alternatively, for example, the device 1000 may provide the feature images output from the feature extraction model 1732, to the server (not shown) to request the output image from the server (not shown). The device 1000 may provide the feature images and the setting information for image modification together to the server (not shown). In this case, the image modification model 1733 and the image regression model 1734 in the Al model 1620 may be included in the server (not shown), and the server (not shown) may generate the output image by using the image modification model 1733 and the image regression model 1734 in the server (not shown). The server (not shown) may provide the generated output image to the device 1000.

The device 1000 may determine whether to generate the output image independently or together with the server (not shown), based on a situation of the device 1000. For example, the device 1000 may determine whether to generate the output image independently or together with the server (not shown), in consideration of a battery level, resource usage, or a communication state. For example, when the battery level of the device 1000 is less than a threshold value, the device 1000 may request the server (not shown) to generate the output image. For example, when the resource usage of the device 1000 is greater than a threshold value, the device 1000 may request the server (not shown) to generate the output image. For example, when the communication state of the device 1000 is good, the device 1000 may request the server (not shown) to generate the output image. In this case, when the device 1000 requests the output image from the server (not shown), it may be set whether to provide the raw image, provide the raw image and the tone map, or provide the feature images, based on various criteria according to the situation of the device 1000. For example, when the camera function is activated, the device 1000 may identify the battery level, the resource usage, or the communication state, and determine whether to provide the raw image, provide the raw image and the tone map, or provide the feature images to the server (not shown). The device 1000 may provide at least one of the raw image, the tone map, or the feature images to the server (not shown), based on the determination to request the output image from the server (not shown).

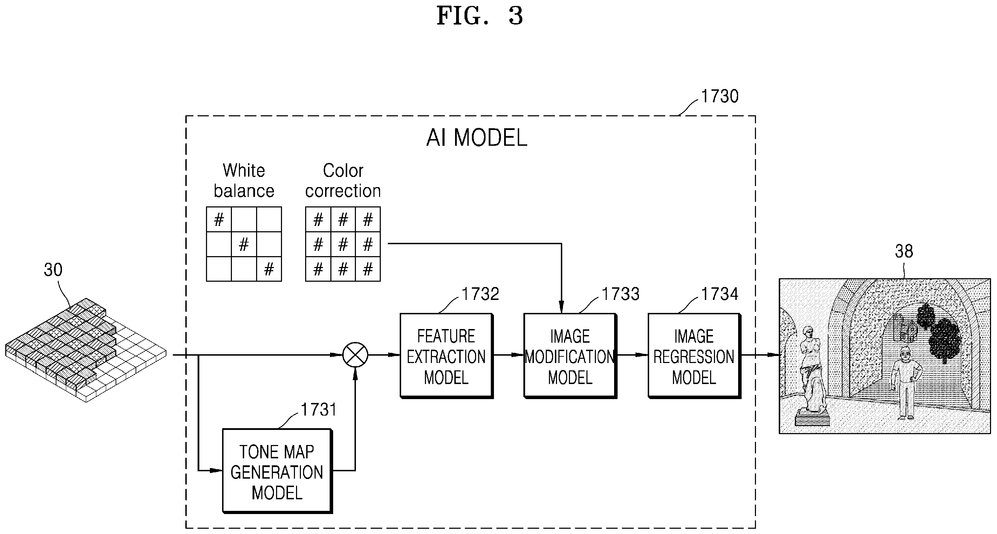

FIG. 3 is a view for describing a process of generating an output image in which a subject has been captured from a raw image, according to an embodiment of the disclosure.

Referring to FIG. 3, using the Al processing unit 1700, the device 1000 may input a raw image 30 corresponding to a subject to the tone map generation model 1731 and obtain a tone map output from the tone map generation model 1731. The device 1000 may combine and input the raw image 30 and the tone map to the feature extraction model 1732 and obtain a plurality of feature images output from the feature extraction model 1732. Then, the device 1000 may input the plurality of feature images to the image modification model 1733 and obtain modified feature images output from the image modification model 1733. After that, the device 1000 may input the modified feature images to the image regression model 1734 and thus obtain an output image 38 output from the image regression model 1734.

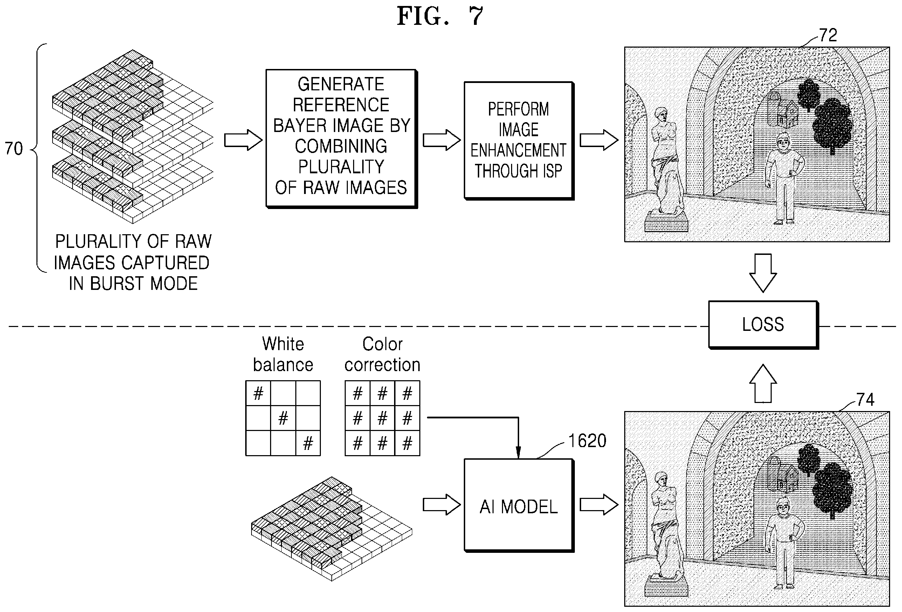

Each of the tone map generation model 1731, the feature extraction model 1732, the image modification model 1733, and the image regression model 1734 may include a plurality of neural network layers. Each of the plurality of neural network layers may have a plurality of weight values and perform neural network computation through computation between a computation result of a previous layer and the plurality of weight values. The plurality of weight values of the plurality of neural network layers may be optimized by a result of training an Al model. For example, the plurality of weight values may be updated to reduce or minimize a loss value or a cost value obtained by the Al model during the training process. An artificial neural network may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or a deep Q-network, but is not limited to the above-mentioned examples. The tone map generation model 1731, the feature extraction model 1732, the image modification model 1733, and the image regression model 1734 may be trained together by using a reference raw image and a reference output image as described below in relation to FIG. 7.

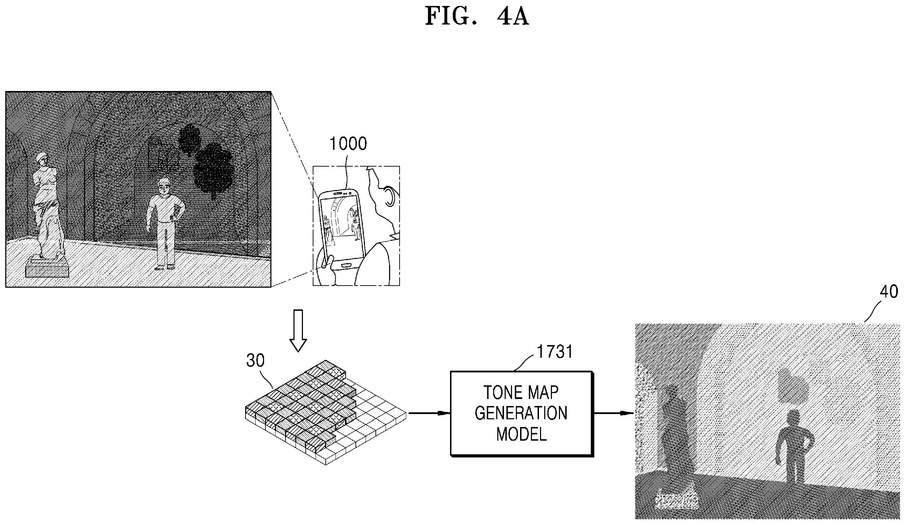

FIG. 4A is a view for describing a process, performed by the device 1000, of generating a tone map from the raw image 30, according to an embodiment of the disclosure.

Referring to FIG. 4A, when a camera application of the device 1000 is executed to activate a camera function, the device 1000 may generate the raw image 30. When a function for capturing a subject is activated, the device 1000 may generate raw images based on light provided from the subject, by using the camera sensor 1400 and, when a user input for capturing the subject is received, the device 1000 may obtain the raw image 30 generated by the camera sensor 1400 at a timing when the user input is received. The raw image 30 may include, for example, an array of red, green, and blue values.

When the camera function is activated, the device 1000 may identify at least one situation for capturing the subject, extract the Al model 1730 corresponding to the identified at least one situation, from the first memory 1600 to load the same into the second memory 1720 in the Al processing unit 1700. When the Al model 1730 corresponding to the identified at least one situation is not stored in the first memory 1600, the device 1000 may request the Al model 1730 from a server (not shown), and receive the Al model 1730 from the server (not shown) to load the same into the second memory 1720.

Then, to generate a tone map 40 used to scale brightness of the red, green, and blue values in the raw image 30, the device 1000 may receive a user input for capturing the subject after the camera application is executed, and input the raw image 30 to the tone map generation model 1731 in response to the received user input. The tone map 40 may include information for scaling brightness of pixels in the raw image 30. For example, the tone map 40 may be generated to scale brightness of a dark region more than that of a bright region in the raw image 30.

The tone map generation model 1731 may include a plurality of neural network layers, and each of the plurality of neural network layers may have a plurality of weight values and perform neural network computation through computation between a computation result of a previous layer and the plurality of weight values. The plurality of weight values of the plurality of neural network layers may be optimized by a result of training the tone map generation model 1731 and, for example, the tone map generation model 1731 may be trained together with the feature extraction model 1732, the image modification model 1733, and the image regression model 1734. For example, the tone map generation model 1731 may include a CNN, but is not limited thereto.

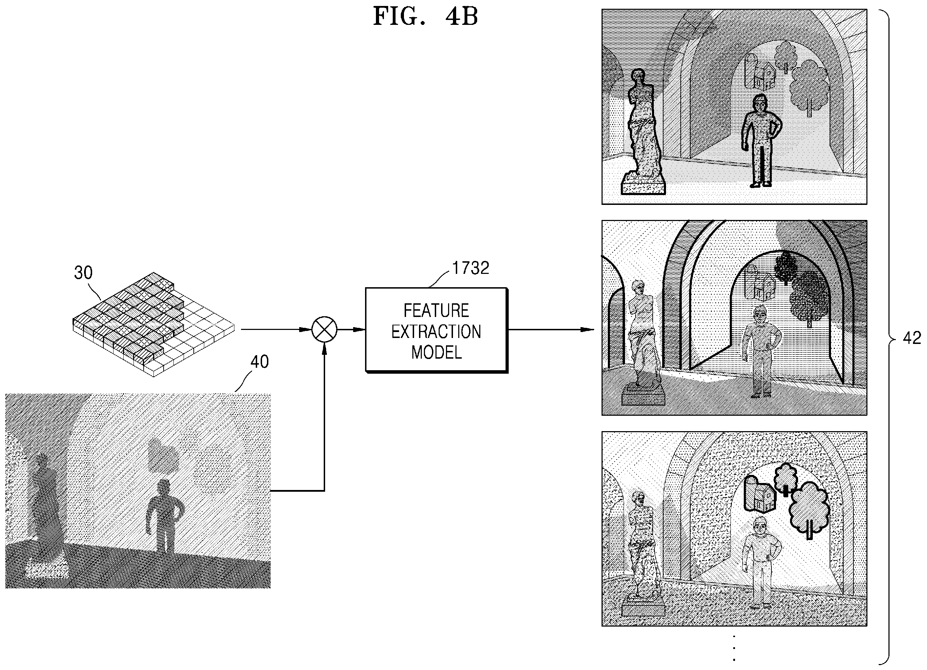

FIG. 4B is a view for describing a process, performed by the device 1000, of extracting features from the raw image 30, according to an embodiment of the disclosure.

Referring to FIG. 4B, the device 1000 may combine and input the raw image 30 and the tone map 40 to the feature extraction model 1732, and obtain a plurality of feature images 42 output from the feature extraction model 1732. For example, the device 1000 may scale brightness of pixels in the raw image 30 by using the tone map 40, and input the brightness-scaled raw image 30 to the feature extraction model 1732. The raw image 30 input to the feature extraction model 1732 may be scaled to increase brightness values of pixels in a dark part, and thus the subject positioned at the dark part in the raw image 30 may be more effectively identified.

The feature extraction model 1732 may extract features in the raw image 30 input to the feature extraction model 1732. The plurality of feature images 42 separately representing a plurality of features in the raw image 30 may be output from the feature extraction model 1732. For example, the plurality of feature images 42 may include a feature image representing features related to edges in the raw image 30, a feature image representing features related to lines in the raw image 30, a feature image representing features related to spaces in the raw image 30, a feature image representing features related to shapes and depths of objects in the raw image 30, a feature image representing features related to people in the raw image 30, and a feature image representing features related to things in the raw image 30, but are not limited thereto.

The feature extraction model 1732 may include a plurality of neural network layers, and each of the plurality of neural network layers may have a plurality of weight values and perform neural network computation through computation between a computation result of a previous layer and the plurality of weight values. The plurality of weight values of the plurality of neural network layers may be optimized by a result of training the feature extraction model 1732 and, for example, the feature extraction model 1732 may be trained together with the tone map generation model 1731, the image modification model 1733, and the image regression model 1734. For example, the feature extraction model 1732 may be implemented by a U-NET having an end-to-end fully convolutional network architecture as described below in relation to FIG. 5, but is not limited thereto.

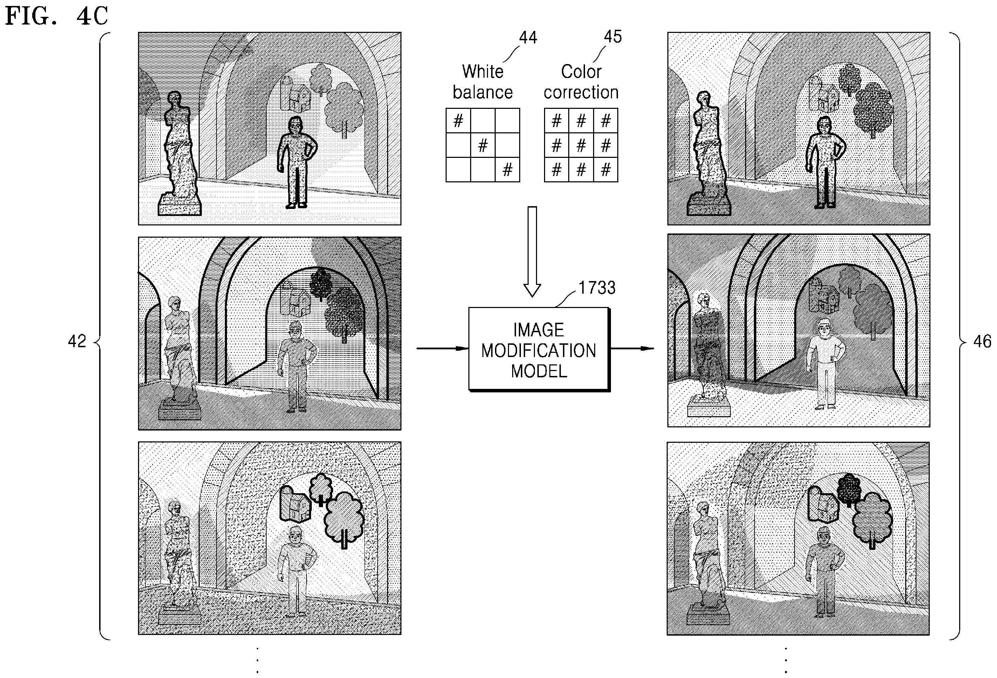

FIG. 4C is a view for describing a process, performed by the device 1000, of modifying feature images, according to an embodiment of the disclosure.

Referring to FIG. 4C, the device 1000 may modify the feature images 42 output from the feature extraction model 1732. The device 1000 may modify the feature images 42 by inputting the feature images 42 output from the feature extraction model 1732 and setting values related to image attributes to the image modification model 1733. For example, the device 1000 may modify the feature images 42, based on preset criteria for white balance adjustment and color correction.

For example, the first processor 1500 of the device 1000 may generate sensing data representing an ambient environment of the device 1000 at a timing when a subject is captured, by using a sensor in the device 1000, automatically identify the ambient environment of the device 1000, based on the generated sensing data, and extract a white balance matrix 44 and color correction matrix 45 for modifying the feature images, from the first memory 1600 based on preset criteria. The first processor 1500 may provide the extracted white balance matrix 44 and color correction matrix 45 to the second processor 1710. The second processor 1710 may input the white balance matrix 44 and color correction matrix 45 received from the first processor 1500, to the image modification model 1733 together with the feature images 42.

Alternatively, for example, when a camera function is activated, the first processor 1500 of the device 1000 may display, on the display 1200 of the device 1000, a GUI for settings for white balance adjustment and color correction of the feature images 42, and preset settings for white balance adjustment and color correction, based on a user input through the GUI. The first processor 1500 may extract the white balance matrix 44 and the color correction matrix 45 from the first memory 1600, based on the settings according to the user input, and provide the white balance matrix 44 and the color correction matrix 45 to the second processor 1710. The second processor 1710 may input the white balance matrix 44 and color correction matrix 45 received from the first processor 1500, to the image modification model 1733 together with the feature images 42.

The device 1000 modifies the feature images 42 by using the image modification model 1733 in the above description, but is not limited thereto. The device 1000 may modify the feature images 42 without using the image modification model 1733. In this case, the device 1000 may modify the feature images 42 by using a matrix for modifying image attributes. For example, the device 1000 may adjust white balance of the feature images 42 by multiplying each of the feature images 42 by the white balance matrix 44 for white balance adjustment. The device 1000 may correct colors of the feature images 42 by multiplying each of the feature images 42 by the color correction matrix 45 for color correction.

Meanwhile, the white balance matrix value and the color correction matrix value are input to the image modification model 1733 in the above description, but are not limited thereto. A plurality of Al models 1620 may be separately trained based on settings related to white balance adjustment and color correction. In this case, to generate an output image, the Al model 1730 corresponding to a certain setting related to white balance adjustment and color correction may be loaded into the second memory 1720 and used by the second processor 1710. Although the white balance matrix value and the color correction matrix value are not input to the Al model 1730 loaded in the second memory 1720, the output image considering the certain setting related to white balance adjustment and color correction may be output from the Al model 1730 loaded in the second memory 1720.

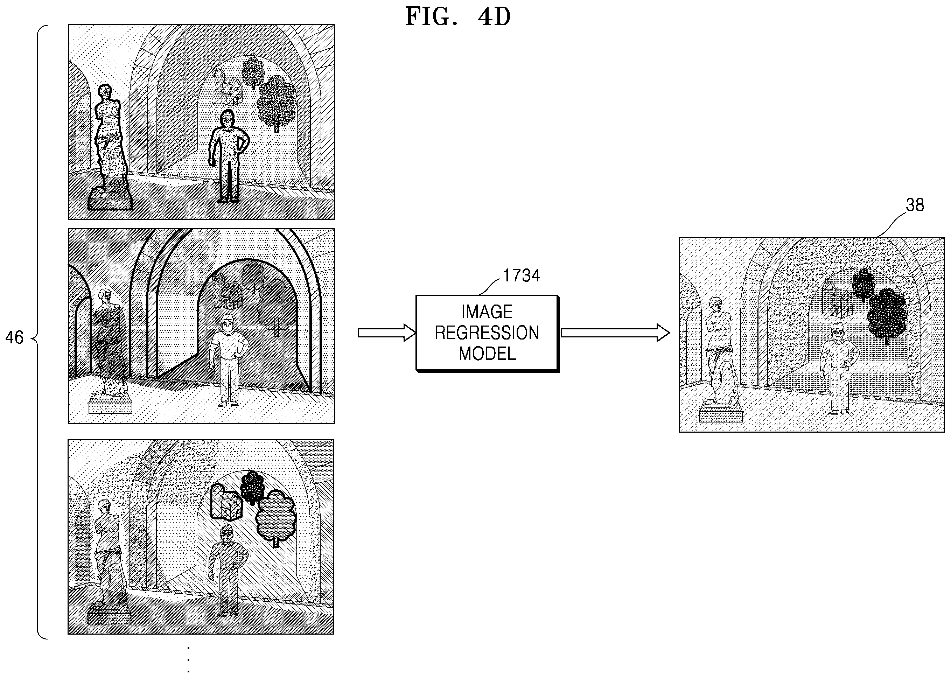

FIG. 4D is a view for describing a process, performed by the device 1000, of generating an output image from modified feature images, according to an embodiment of the disclosure.

The device 1000 may input modified feature images 46 to the image regression model 1734, and obtain an output image 38 output from the image regression model 1734. The output image 38 output from the image regression model 1734 may be an image to be stored in the device 1000 as a result of capturing a subject. The image regression model 1734 may include a plurality of neural network layers, and each of the plurality of neural network layers may have a plurality of weight values and perform neural network computation through computation between a computation result of a previous layer and the plurality of weight values. The plurality of weight values of the plurality of neural network layers may be optimized by a result of training the image regression model 1734 and, for example, the image regression model 1734 may be trained together with the tone map generation model 1731 and the feature extraction model 1732. For example, the image regression model 1734 may include a CNN, but is not limited thereto.

FIG. 5 is a view showing an example of a structure of the feature extraction model 1732, according to an embodiment of the disclosure.

Referring to FIG. 5, the feature extraction model 1732 may be implemented by a U-NET having an end-to-end fully convolutional network architecture. The feature extraction model 1732 may include layers of a contraction path configured to capture context of an input image, and layers of an expansion path for performing up-sampling to obtain a high-resolution result from a feature image of the contraction path. The layers of the contraction path may be symmetrical to the layers of the expansion path.

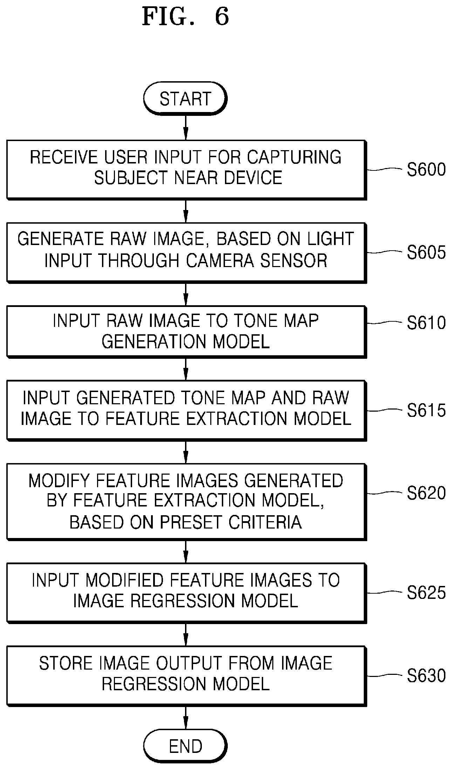

FIG. 6 is a flowchart of a method, performed by the device 1000, of generating an output image by capturing a subject, according to an embodiment of the disclosure.

In operation S600, the device 1000 may receive a user input for capturing a subject near the device 1000 and, in operation S605, the device 1000 may generate a raw image, based on light input through the camera sensor 1400. When a function for capturing the subject is activated, the device 1000 may generate raw images based on light provided from the subject, by using the camera sensor 1400 and, when a user input for capturing the subject is received, the device 1000 may obtain a raw image generated by the camera sensor 1400 at a timing when the user input is received.

In operation S610, the device 1000 may input the raw image to the tone map generation model 1731. The device 1000 may input the raw image to the tone map generation model 1731, and obtain a tone map output from the tone map generation model 1731.

In operation S615, the device 1000 may input the generated tone map and the raw image to the feature extraction model 1732. The device 1000 may scale brightness of pixels in the raw image by using the tone map, and input the brightness-scaled raw image to the feature extraction model. The device 1000 may obtain feature images output from the feature extraction model 1732.

In operation S620, the device 1000 may modify the feature images generated by the feature extraction model 1732, based on preset criteria. The device 1000 may modify the feature images, based on preset settings related to image attributes. For example, the device 1000 may modify the feature images, based on preset criteria for white balance adjustment and color correction, but the preset criteria for modifying the feature images are not limited thereto.

In operation S625, the device 1000 may input the modified feature images to the image regression model 1734 and, in operation S630, the device 1000 may store an output image output from the image regression model 1734.

FIG. 7 is a view showing an example of training the Al model 1620, according to an embodiment of the disclosure.

Referring to FIG. 7, a reference image 72 generated by performing image signal processing (ISP) on a reference raw image may be used as a GT image for training the Al model 1620. For example, the reference raw image may be generated by combining a plurality of raw images 70 generated by capturing a subject in a burst mode for a short period of time, and the reference image 72 may be output by performing ISP processing on the reference raw image. Existing ISP processing may be existing image processing performed on a raw image without using an Al model, e.g., image processing including preprocessing, white balance adjustment, demosaicing, gamma correction, color correction, etc. performed on a raw image without using an Al model. The output reference image 72 may be used as a GT image of the Al model. Alternatively, one of the plurality of raw images 70 generated by capturing the subject in a burst mode for a short period of time may be selected, and an image output by performing existing ISP processing on the selected raw image may be used as a GT image.

To train the Al model 1620, the reference raw image or one of the plurality of raw images 70 captured in a burst mode may be input to the Al model 1620. For example, when eight raw images are generated in a burst mode, a reference raw image may be generated by combining the eight raw images, and the reference raw image and a reference image generated from the reference raw image through existing ISP processing may be used to train the Al model 1620. Alternatively, for example, when eight raw images are generated in a burst mode, eight output images may be separately generated from the eight raw images through existing ISP processing. In this case, one of the eight raw images may be selected, and the selected raw image and an output image corresponding to the selected raw image may be used to train the Al model 1620.

Setting information for modifying image attributes of feature images may be input to the Al model 1620. The setting information for modifying image attributes may include, for example, a preset matrix for white balance adjustment and a preset matrix for color correction. Setting information of various settings may be input to the Al model 1620 to train the Al model 1620 based on various image attributes.

A certain reference raw image including noise may be input to the Al model 1620 to train the Al model 1620. In this case, reference raw images including gradually increasing noise may be input to the Al model 1620 to train the Al model 1620. For example, a server (not shown) or the device 1000 may generate n input images by using reference raw images including noise of first to nth levels, and input the n input images to the Al model 1620 to train the Al model 1620. As such, the Al model 1620 may be trained to output a denoised output image from a raw image including noise.

By comparing the reference image 72 with an output image 74 output from the Al model 1620, weight values of neural network layers in the Al model 1620 may be tuned to reduce a loss between the reference image 72 and the output image 74. In this case, the Al model 1620 may include the tone map generation model 1731, the feature extraction model 1732, and the image regression model 1734, and thus weight values of neural network layers in the tone map generation model 1731, weight values of neural network layers in the feature extraction model 1732, and weight values of neural network layers in the image regression model 1734 may be tuned together.

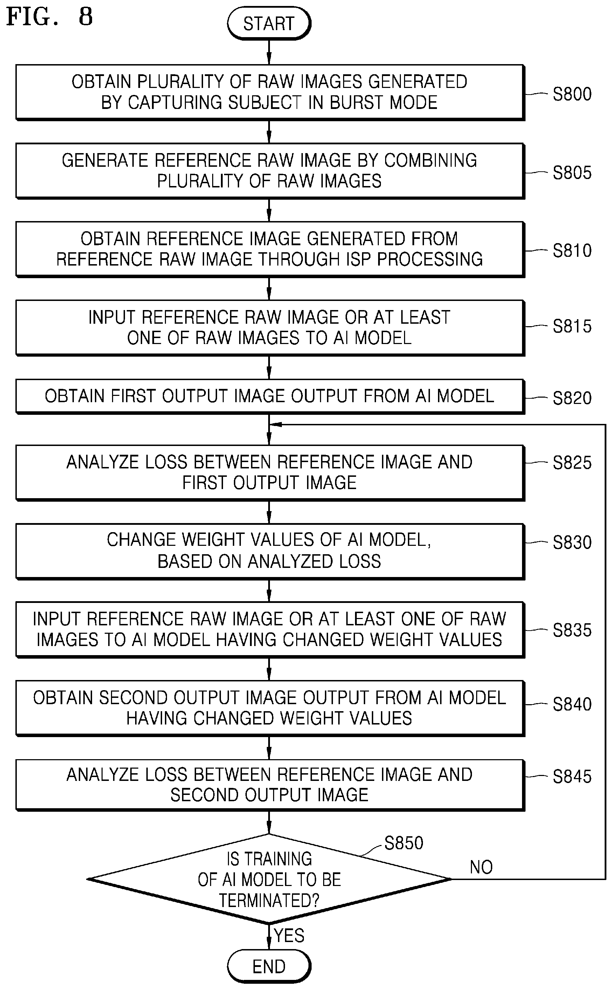

FIG. 8 is a flowchart of a method of training the Al model 1620, according to an embodiment of the disclosure.

In operation S800, a server (not shown) may obtain a plurality of raw images generated by capturing a subject in a burst mode. The server (not shown) may obtain the plurality of raw images generated by capturing the subject in a burst mode for a short period of time. Because the plurality of raw images are generated in a burst mode, the plurality of raw images may have similar image information.

In operation S805, the server (not shown) may generate a reference raw image by combining the plurality of raw images. The server (not shown) may generate one reference raw image by combining the plurality of raw images by using image fusion.

In operation S810, the server (not shown) may obtain a reference image generated from the reference raw image through ISP processing. ISP processing may be existing image processing performed on a raw image without using an Al model, e.g., image processing including preprocessing, white balance adjustment, demosaicing, gamma correction, color correction, etc. performed on a raw image without using an Al model. The reference image generated through ISP processing may be used as a GT image of the Al model 1620.

In operation S815 and S820, the server (not shown) may obtain a first output image output from the Al model 1620. The server (not shown) may input the reference raw image or one of the plurality of raw images to the Al model 1620 (S815), and obtain the first output image output from the Al model 1620 (S820). The Al model 1620 to be trained by the server (not shown) may include the elements of the Al model 1620 shown in FIG. 3.

In operation S825, the server (not shown) may analyze a loss between the reference image and the first output image. The server (not shown) may use the reference image as a GT image, and compare the reference image with the first output image.

In operation S830, the server (not shown) may change weight values of the Al model 1620, based on the analyzed loss. The server (not shown) may tune weight values of neural network layers in the Al model 1620 to reduce the loss between the reference image and the first output image. In this case, the Al model 1620 may include the tone map generation model 1731, the feature extraction model 1732, and the image regression model 1734, and thus weight values of neural network layers in the tone map generation model 1731, weight values of neural network layers in the feature extraction model 1732, and weight values of neural network layers in the image regression model 1734 may be tuned together.

In operation S835, the server (not shown) may input the reference raw image or at least one of the raw images to the Al model 1620 having the changed weight values, in operation S840, the server (not shown) may obtain a second output image output from the Al model 1620 having the changed weight values and, in operation S845, the server (not shown) may analyze a loss between the reference image and the second output image.

In operation S850, the server (not shown) may determine whether to terminate training of the Al model 1620. When the loss analyzed in operation S845 is less than a preset threshold value, the server (not shown) may determine to terminate training of the Al model 1620 and, when the loss analyzed in operation S845 is greater than the preset threshold value, the server (not shown) may repeat the operations for changing the weight values of the Al model 1620.

Meanwhile, a plurality of Al models 1620 may be trained based on a plurality of situations. For example, the plurality of Al models 1620 may be trained based on situations related to at least one of camera filters, camera lenses, camera manufacturers, device models, a plurality of images captured in a burst mode, shooting environments, subject types, or image attributes.

For example, the Al models 1620 may be trained using reference raw images and reference images captured using an unsharp mask, reference raw images and reference images captured using an contrast adjustment mask, and reference raw images and reference images captured using a color filter mask, but are not limited thereto. For example, the Al models 1620 may be trained using reference raw images and reference images captured based on camera lenses, and the camera lenses may include, for example, a telephoto lens, a wide-angle lens, and a fisheye lens, but are not limited thereto. For example, the Al models 1620 may be trained using reference raw images and reference images captured based on camera manufacturers, or reference raw images and reference images captured based on device models, but are not limited thereto. For example, the Al models 1620 may be trained using reference raw images and reference images captured in an indoor environment, reference raw images and reference images captured in an outdoor environment, and reference raw images and reference images captured in a specific luminance range, but are not limited thereto. For example, the Al models 1620 may be trained using reference raw images and reference images of people, reference raw images and reference images of food, and reference raw images and reference images of buildings, but are not limited thereto. For example, the Al models 1620 may be trained using reference raw images and reference images captured based on image attributes, and the image attributes may include, for example, white balance, ISO, and shutter speed, but are not limited thereto.

Meanwhile, the Al model 1620 is trained by the server (not shown) in the description related to FIG. 8, but is not limited thereto. The Al model 1620 may be trained by the device 1000. In this case, the device 1000 may directly generate the reference raw image and the reference image to be used to train the Al model 1620, or request and receive the same from the server (not shown).

For example, the device 1000 may provide images captured by the device 1000, to the server (not shown) to request the reference raw image and the reference image for training the Al model 1620 from the server (not shown). The server (not shown) may analyze the images received from the device 1000 and provide, to the device 1000, the reference raw image and the reference image related to a situation preferred by a user of the device 1000. For example, the server (not shown) may identify the situation preferred by the user, e.g., a type of the device 1000 used by the user, a type of a subject in the images captured by the device 1000, an image style preferred by the user, or an environment of a place where the user usually shoots (e.g., indoor, outdoor, luminance, or weather), by analyzing the images received from the device 1000. Alternatively, for example, the device 1000 may provide information about a camera type or a lens type of the device 1000, to the server (not shown) to request the reference raw image and the reference image for training the Al model 1620 from the server (not shown). The server (not shown) may provide, to the device 1000, the reference raw image and the reference image related to the camera type or the lens type received from the device 1000.

Alternatively, the device 1000 may provide user preference information indicating an image style, a shooting environment, and subjects preferred by the user, to the server (not shown) to request the reference raw image and the reference image for training the Al model 1620 from the server (not shown). The server (not shown) may provide, to the device 1000, the reference raw image and the reference image related to the user preference information received from the device 1000.

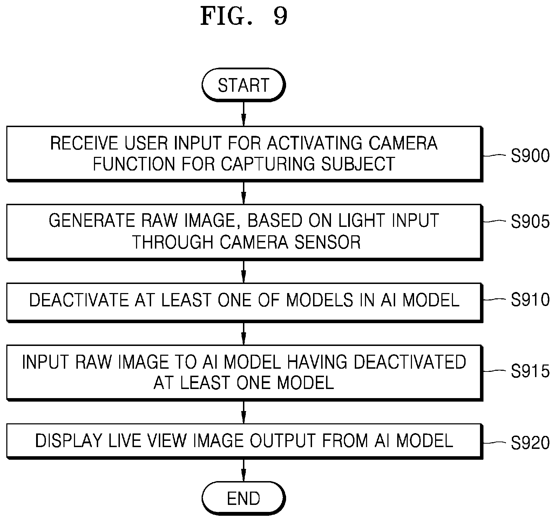

FIG. 9 is a flowchart of a method, performed by the device 1000, of outputting a live view image, according to an embodiment of the disclosure.

In operation S900, the device 1000 may receive a user input for activating a camera function for capturing a subject. For example, the device 1000 may receive a user input for executing a camera application installed in the device 1000.

In operation S905, the device 1000 may generate a raw image, based on light input through the camera sensor 1400. When the camera function is activated, the device 1000 may generate the raw image used to generate a live view image.

In operation S910, the device 1000 may deactivate at least one of models in the Al model 1730. The device 1000 may deactivate at least one of the tone map generation model 1731, the feature extraction model 1732, the image modification model 1733, or the image regression model 1734. A model to be deactivated to generate the live view image from among the tone map generation model 1731, the feature extraction model 1732, the image modification model 1733, or the image regression model 17344 may be preset.

In operation S915, the device 1000 may input the raw image to the Al model 1730 having the deactivated at least one model and, in operation S920, the device 1000 may display, on a screen, a live view image output from the Al model 1730. In this case, the Al model 1620 may be pre-trained to output a satisfactory live view image while at least one of the models in the Al model 1620 is deactivated.

Meanwhile, the live view image is generated using the Al model 1730 in which at least one of the tone map generation model 1731, the feature extraction model 1732, the image modification model 1733, or the image regression model 1734 is deactivated, in the above description, but is not limited thereto. The live view image may be generated using the Al model 1730 in which the tone map generation model 1731, the feature extraction model 1732, the image modification model 1733, and the image regression model 1734 are all activated.

Meanwhile, an output image in which the subject has been captured may be generated and stored using the Al model 1730 in which at least one of the tone map generation model 1731, the feature extraction model 1732, the image modification model 1733, or the image regression model 1734 is deactivated.

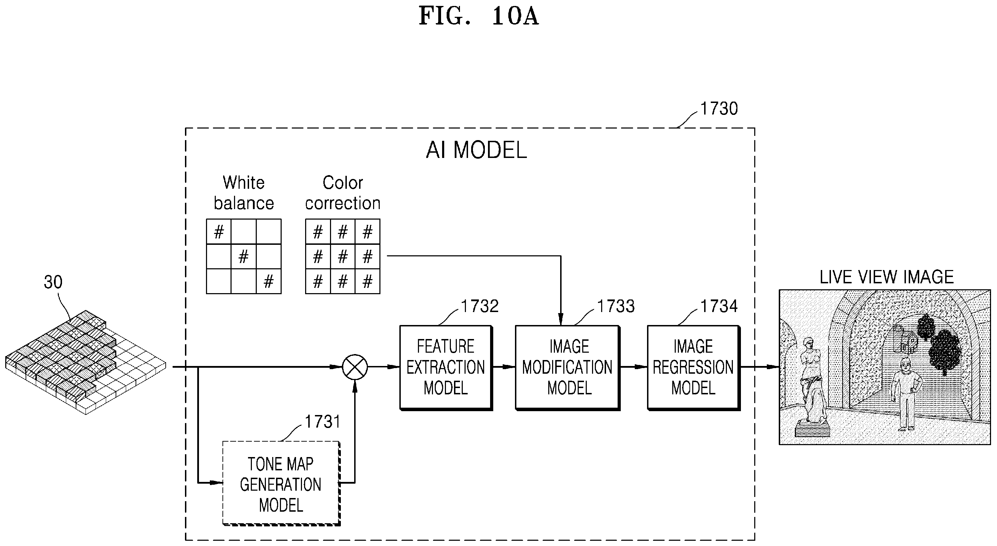

FIG. 10A is a view showing an example of deactivating the tone map generation model 1731 in the Al model 1730 to generate a live view image, according to an embodiment of the disclosure.

Referring to FIG. 10A, while the tone map generation model 1731 in the Al model 1730 is deactivated, a raw image may be input to the Al model 1730. The raw image may be input to the feature extraction model 1732, feature images output from the feature extraction model 1732 may be modified, the modified feature images may be input to the image regression model 1734, and a live view image may be output from the image regression model 1734. In this case, the Al model 1730 may be a model trained in the same manner as in FIG. 7 while the tone map generation model 1731 is deactivated.

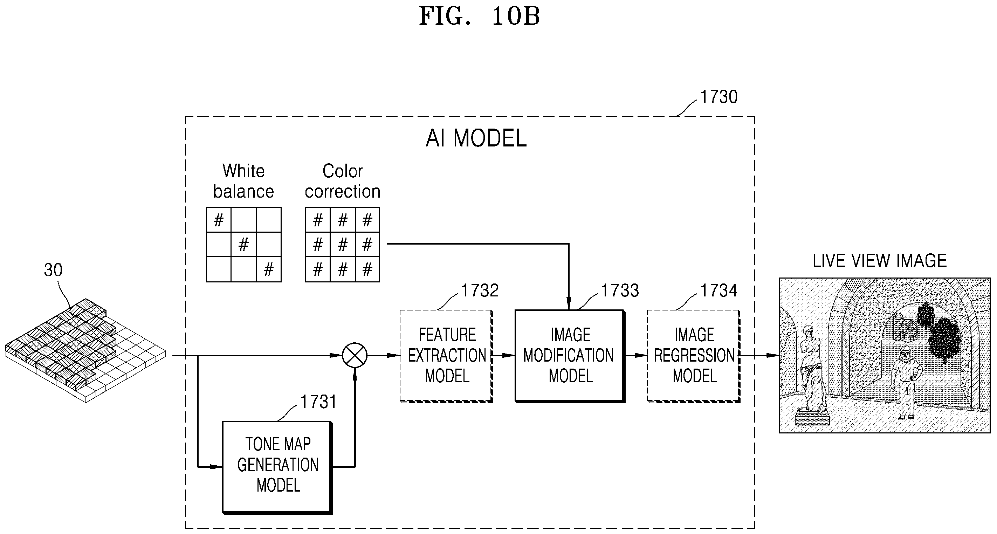

FIG. 10B is a view showing an example of deactivating the feature extraction model 1732 and the image regression model 1734 in the Al model 1730 to generate a live view image, according to an embodiment of the disclosure.

Referring to FIG. 10B, while the feature extraction model 1732 and the image regression model 1734 in the Al model 1730 are deactivated, a raw image may be input to the Al model 1730. The raw image may be input to the tone map generation model 1731, brightness of the raw image may be scaled based on a tone map output from the tone map generation model 1731, and the brightness-scaled raw image may be modified to generate a live view image. In this case, the Al model 1730 may be a model trained in the same manner as in FIG. 7 while the feature extraction model 1732 and the image regression model 1734 are deactivated.

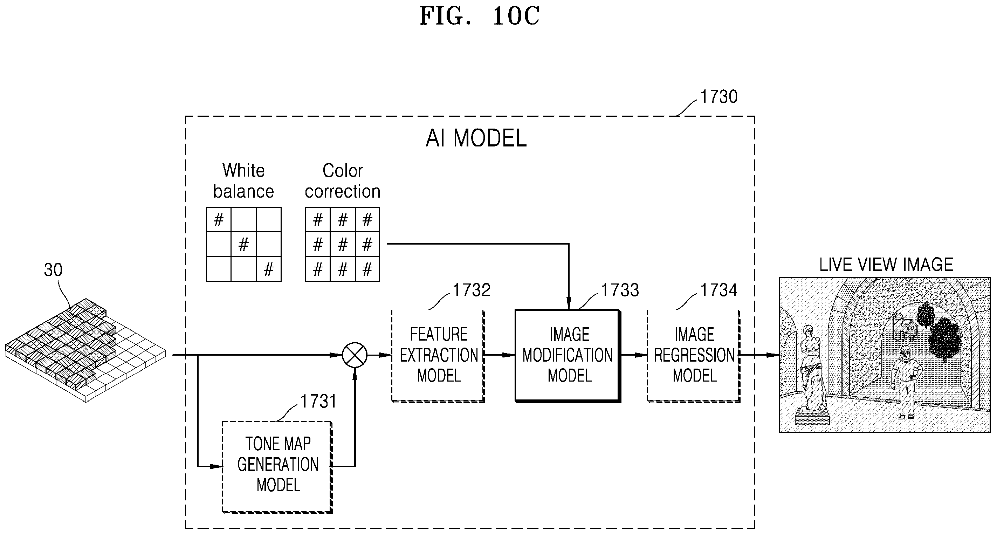

FIG. 10C is a view showing an example of deactivating the tone map generation model 1731, the feature extraction model 1732, and the image regression model 1734 in the Al model 1730 to generate a live view image, according to an embodiment of the disclosure.

Referring to FIG. 10C, while the tone map generation model 1731, the feature extraction model 1732, and the image regression model 1734 in the Al model 1730 are deactivated, a raw image may be modified to generate a live view image.

Meanwhile, a white balance matrix value and a color correction matrix value are input to the image modification model 1733 in FIGS. 10A to 10C, but are not limited thereto. A plurality of Al models 1620 may be separately trained based on settings related to white balance adjustment and color correction. In this case, to generate the live view image, the Al model 1730 corresponding to a certain setting related to white balance adjustment and color correction may be loaded into the second memory 1720 and used by the second processor 1710. Although the white balance matrix value and the color correction matrix value are not input to the Al model 1730 loaded in the second memory 1720, the live view image considering the certain setting related to white balance adjustment and color correction may be output from the Al model 1730 loaded in the second memory 1720.

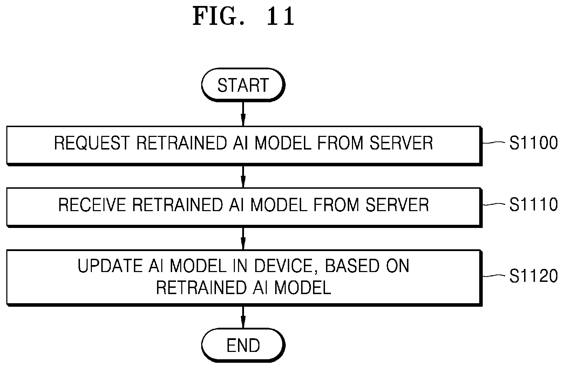

FIG. 11 is a flowchart of a method, performed by the device 1000, of updating the Al model 1620 by receiving a retrained AI model 1620 from a server (not shown).

In operation S1100, the device 1000 may request a retrained AI model 1620 from the server (not shown). The Al model 1620 may be retrained by the server (not shown), and the server (not shown) may provide, to the device 1000, notification information indicating that the retrained Al model 1620 is present. The device 1000 may display, on a screen, the notification information received from the server (not shown), and receive a user input for updating the Al model 1620. The device 1000 may provide information about photo attributes preferred by a user, to the server (not shown) to request the retrained Al model 1620 from the server (not shown).

The device 1000 may provide images captured by the device 1000, to the server (not shown) to request the retrained Al model 1620 from the server (not shown). The server (not shown) may analyze the images received from the device 1000, and retrain the Al model 1620 by using a reference raw image and a reference image related to a situation preferred by the user of the device 1000. For example, the server (not shown) may identify the situation preferred by the user, e.g., a type of the device 1000 used by the user, a type of a subject in the images captured by the device 1000, an image style preferred by the user, or an environment of a place where the user usually shoots (e.g., indoor, outdoor, luminance, or weather), by analyzing the images received from the device 1000. The server (not shown) may retrain the Al model 1620 by using the reference raw image and the reference image related to the situation preferred by the user.

Alternatively, for example, the device 1000 may provide information about a camera type or a lens type of the device 1000, to the server (not shown) to request the retrained Al model 1620 from the server (not shown). The server (not shown) may retrain the Al model 1620 by using the reference raw image and the reference image related to the camera type or the lens type received from the device 1000.

Alternatively, the device 1000 may provide user preference information indicating an image style, a shooting environment, and subjects preferred by the user, to the server (not shown) to request the retrained Al model 1620 from the server (not shown). The server (not shown) may retrain the Al model 1620 by using the reference raw image and the reference image related to the user preference information received from the device 1000.

In operation S1110, the device 1000 may receive the retrained Al model 1620 from the server (not shown). When the device 1000 has provided, to the server (not shown), the information about the photo attributes preferred by the user, the server (not shown) may provide, to the device 1000, the Al model 1620 retrained in relation to the photo attributes preferred by the user.

In operation S1120, the device 1000 may update the Al model 1620 in the device 1000, based on the retrained Al model 1620. The device 1000 may update the Al model 1620 in the device 1000, for example, by replacing the Al model 1620 in the device 1000 with the retrained Al model 1620 received from the server (not shown).

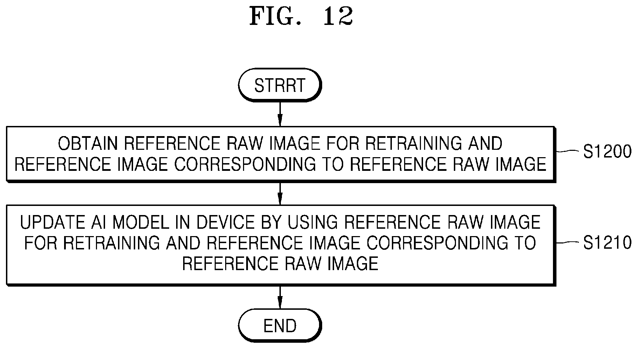

FIG. 12 is a flowchart of a method, performed by the device 1000, of retraining and updating the Al model 1620.

In operation S1200, the device 1000 may obtain a reference raw image for retraining and a reference image corresponding to the reference raw image. The reference image may be an image generated from the reference raw image for retraining. The device 1000 may request and receive, from a server (not shown), the reference raw image and the reference image for retraining the Al model 1620. In this case, the device 1000 may provide, to the server (not shown), photos captured by the device 1000 or information about photo attributes preferred by a user, and the server (not shown) may provide, to the device 1000, the reference image and the reference raw image generated in relation to a situation preferred by the user.

For example, the device 1000 may provide images captured by the device 1000, to the server (not shown) to request the reference raw image and the reference image for retraining the Al model 1620 from the server (not shown). The server (not shown) may analyze the images received from the device 1000 and provide, to the device 1000, the reference raw image and the reference image related to a situation preferred by the user of the device 1000. For example, the server (not shown) may identify the situation preferred by the user, e.g., a type of the device 1000 used by the user, a type of a subject in the images captured by the device 1000, an image style preferred by the user, or an environment of a place where the user usually shoots (e.g., indoor, outdoor, luminance, or weather), by analyzing the images received from the device 1000. The server (not shown) may provide, to the device 1000, the reference raw image and the reference image related to the situation preferred by the user.

Alternatively, for example, the device 1000 may provide information about a camera type or a lens type of the device 1000, to the server (not shown) to request the reference raw image and the reference image for retraining the Al model 1620 from the server (not shown). The server (not shown) may provide, to the device 1000, the reference raw image and the reference image related to the camera type or the lens type received from the device 1000.

Alternatively, the device 1000 may provide user preference information indicating an image style, a shooting environment, and subjects preferred by the user, to the server (not shown) to request the reference raw image and the reference image for retraining the Al model 1620 from the server (not shown). The server (not shown) may provide, to the device 1000, the reference raw image and the reference image related to the user preference information received from the device 1000.

In operation S1210, the device 1000 may update the Al model 1620 in the device 1000 by using the reference raw image for retraining and the reference image corresponding to the reference raw image. The device 1000 may use the reference image received from the server (not shown), as a GT image, and retrain the Al model 1620 by inputting the reference raw image received from the server (not shown), to the Al model 1620 and comparing an output image output from the Al model 1620, with the reference image.

Al-related functions according to the disclosure are preformed using a processor and a memory. The processor may include one or more processors. In this case, the one or more processors may include a general-purpose processor (e.g., a CPU, an AP, and a DSP), a dedicated graphics processor (e.g., a GPU and a VPU), or a dedicated Al processor (e.g., a NPU). The one or more processors control input data to be processed based on a predefined operation rule or Al model stored in the memory. Alternatively, when the one or more processors include a dedicated Al processor, the dedicated Al processor may be designed in a hardware structure specialized to process a specific Al model.

The predefined operation rule or Al model is made through training. When the predefined operation rule or Al model is made through training, it means that a basic Al model is trained using a plurality of pieces of training data according to a learning algorithm and thus a predefined operation rule or Al model configured to perform a desired characteristic (or purpose) is made. The training may be performed by a device for performing Al operations according to the disclosure, or by a server and/or system. The learning algorithm may include, supervised learning, unsupervised learning, semi-supervised learning, or reinforcement learning, but is not limited to the above-mentioned examples.

The Al model may include a plurality of neural network layers. Each of the plurality of neural network layers has a plurality of weight values and performs neural network computation through computation between a computation result of a previous layer and the plurality of weight values. The plurality of weight values of the plurality of neural network layers may be optimized by a result of training the Al model. For example, the plurality of weight values may be updated to reduce or minimize a loss value or a cost value obtained by the Al model during the training process. An artificial neural network may include, for example, a CNN, a DNN, a RNN, a RBM, a DBN, a BRDNN, or a deep Q-network, but is not limited to the above-mentioned examples.

In an embodiment of the disclosure, a raw image may be used as input data of the Al model and output image data may be output from the Al model. The Al model may be made through training. When the Al model is made through training, it means that a basic Al model is trained using a plurality of pieces of training data according to a learning algorithm and thus a predefined operation rule or Al model configured to perform a desired characteristic (or purpose) is made. The Al model may include a plurality of neural network layers. Each of the plurality of neural network layers has a plurality of weight values and performs neural network computation through computation between a computation result of a previous layer and the plurality of weight values. The Al model may be used for object recognition, object tracking, image retrieval, human recognition, scene recognition, 3D reconstruction/localization, image enhancement, etc.

An embodiment of the disclosure may be implemented in the form of recording media including computer-executable instructions, e.g., program modules to be executed by the computer. The computer-readable media may be any available media that can be accessed by the computer, and include both volatile and non-volatile media, and removable and non-removable media. The computer-readable media may include computer storage media and communication media. The computer storage media include both volatile and non-volatile media, and removable and non-removable media implemented in any method or technology for storage of information such as computer-readable instructions, data structures, program modules, or other data. The communication media may typically include computer-readable instructions, data structures, program modules, or other data in modulated data signals.

The computer-readable storage media may be provided in the form of non-transitory storage media. When the storage medium is 'non-transitory', it means that the storage medium is tangible and does not include signals (e.g., electromagnetic waves), and it does not limit that data is semi-permanently or temporarily stored in the storage medium. For example, the 'non-transitory storage medium' may include a buffer storing data temporarily.

According to an embodiment, the method according to various embodiments of the disclosure may be included and provided in a computer program product. The computer program product may be traded as a commercial product between sellers and purchasers. The computer program product may be distributed in the form of machine-readable storage media (e.g., compact disc read-only memory (CD-ROM)), or be electronically distributed (e.g., downloaded or uploaded) via an application store (e.g., PlayStoreTM) or directly between two user devices (e.g., smartphones). For electronic distribution, at least a part of the computer program product (e.g., a downloadable app) may be temporarily generated or be at least temporarily stored in a machine-readable storage medium, e.g., memory of a server of a manufacturer, a server of an application store, or a relay server.

As used herein, the term "unit" may indicate a hardware component such as a processor or a circuit, and/or a software component executable by the hardware component such as the processor.

Throughout the disclosure, the expression "at least one of a, b or c" indicates only a, only b, only c, both a and b, both a and c, both b and c, all of a, b, and c, or variations thereof.

The above descriptions of the disclosure are provided for the purpose of illustration, and it will be understood by one of ordinary skill in the art that various changes in form and details may be easily made therein without departing from the scope of the disclosure. Therefore, it should be understood that the afore-described embodiments should be considered in a descriptive sense only and not for purposes of limitation. For example, each component described to be of a single type can be implemented in a distributed manner and, likewise, components described as being distributed can be implemented in a combined manner.

The scope of the disclosure is defined by the following claims rather than by the detailed description.

## Claims

1. A method, performed by a device, of generating an output image in which a subject has been captured from a raw image, the method comprising:
obtaining a raw image corresponding to a subject in front of a camera sensor in the device by controlling the camera sensor, by using a first processor (1500) configured to control the device;
inputting the raw image corresponding to the subject in front of the camera sensor to a first artificial intelligence (AI) model (1731) trained to be used for scaling brightness of an image, by using a second processor (1710) configured to perform image processing on the raw image by using an AI model;
obtaining tone map data output from the first AI model (1731), by using the second processor (1710);
scaling brightness of the raw image based on the tone map data;
inputting the scaled raw image to a second AI model (1732) trained to analyze features of an image;
obtaining a plurality of feature images output from the second AI model (1732), the plurality of feature images being associated with geometric features in the raw image;
modifying, by a third AI model (1733), the plurality of feature images output from the second AI model (1732), based on at least one preset setting for modifying features of an image;
generating an output image comprising the subject, based on the plurality of feature images modified based on the at least one setting,
which are performed using the second processor (1710); and
storing the output image by using the first processor (1500),
wherein the at least one preset setting comprises at least one of a setting for white balance adjustment or a setting for color correction.

2. The method of claim 1, wherein the generating of the output image comprises inputting the plurality of modified feature images to the third AI model (1733) for generating an output image, by using the second processor (1710).

3. The method of claim 2, wherein the first AI model (1731) is a model pre-trained to generate a tone map for scaling brightness of each pixel of the raw image,
wherein the second AI model (1732) is a model pre-trained to analyze a plurality of preset features in an image,
wherein the third AI model (1733) is a model pre-trained to regress an output image from a plurality of feature images.

4. The method of claim 2, wherein the first, second, and third AI models (1731, 1732, 1733) are trained together based on a reference raw image and, a reference output image generated from the reference raw image through preset image signal processing (ISP).

5. The method of claim 4, wherein the first, second, and third AI models (1731, 1732, 1733) are trained together, based on a loss between the reference output image generated through preset ISP processing from the reference raw image generated by combining a plurality of raw images generated in a burst mode, and an output image output through the first, second, and third AI models (1731, 1732, 1733) from the reference raw image.

6. The method of claim 1, wherein the raw image is an image generated through an image sensor and a color filter in the camera sensor, and has any one pattern from among a Bayer pattern, a RGBE pattern, an RYYB pattern, a CYYM pattern, a CYGM pattern, a RGBW Bayer pattern, and an X-trans pattern.

7. The method of claim 2, wherein the first, second, and third AI models (1731, 1732, 1733) are selected by reflecting a preference of a user of the device.

8. The method of claim 2, further comprising:
generating a live view image from the raw image, without using at least one of the first, second, or third AI model (1731, 1732, 1733); and
displaying the generated live view image.

9. The method of claim 2, further comprising retraining the first, second, and third AI models (1731, 1732, 1733).

10. The method of claim 9, wherein the retraining comprises:
obtaining a reference image for the retraining, and a reference raw image corresponding to the reference image; and
retraining the first, second, and third AI models (1731, 1732, 1733), by using the obtained reference image and reference raw image.

11. A device for generating an output image in which a subject has been captured from a raw image, the device comprising:
a camera sensor (1400);
a display (1200);
a first memory (1600) storing first instructions for controlling the device;
a first processor (1500) configured to execute the first instructions stored in the first memory (1600);
a second memory (1720) storing at least one artificial intelligence (AI) model (1730) for performing image processing on the raw image, and second instructions related to execution of the AI model, and
a second processor (1710) configured to execute the at least one AI model and second instructions stored in the second memory (1720),
wherein the first processor (1500) is further configured to obtain a raw image corresponding to a subject in front of the camera sensor by using the camera sensor (1400),
wherein the second processor (1710) is further configured to input the raw image corresponding to the subject in front of the camera sensor (1400) to a first AI model trained to be used for scaling brightness of an image,
wherein the second processor (1710) is further configured to obtain tone map data output from the first AI model (1731),wherein the second processor (1710) is configured to execute the second instructions to:
scale brightness of the raw image based on the tone map data;
input the scaled raw image to a second AI model (1732) trained to analyze features of an image;
obtain a plurality of feature images output from the second AI model (1732), the plurality of feature images being associated with geometric features in the raw image;
modify, by a third AI model (1733), the plurality of feature images output from the second AI model (1732), based on at least one preset setting for modifying features of an image; and
generate an output image comprising the subject, based on the plurality of feature images modified based on the at least one setting,
wherein the first processor (1500) is configured to store, in the first memory (1600), the output image, and
wherein the at least one preset setting comprises at least one of a setting for white balance adjustment or a setting for color correction.

12. A computer-readable recording medium having recorded thereon a program, which when executed on a computer, performs the steps of the method according to claim 1.

## Patentansprüche

1. Verfahren, das von einer Vorrichtung durchgeführt wird, um aus einem Rohbild ein Ausgabebild zu erzeugen, in dem ein Objekt erfasst wurde, wobei das Verfahren Folgendes umfasst:
Erhalten eines Rohbildes, das einem Objekt vor einem Kamerasensor in der Vorrichtung entspricht, durch Steuern des Kamerasensors unter Verwendung eines ersten Prozessors (1500), der zum Steuern der Vorrichtung konfiguriert ist;
Eingeben des Rohbildes, das dem Objekt vor dem Kamerasensor entspricht, in ein erstes Modell (1731) der künstlichen Intelligenz (KI), das so trainiert ist, dass es zur Skalierung der Helligkeit eines Bildes verwendet werden kann, unter Verwendung eines zweiten Prozessors (1710), der so konfiguriert ist, dass er eine Bildverarbeitung des Rohbildes unter Verwendung eines KI-Modells durchführt;
Erhalten von Tonwertkartendaten, die von dem ersten KI-Modell (1731) ausgegeben werden, unter Verwendung des zweiten Prozessors (1710);
Skalieren der Helligkeit des Rohbildes basierend auf den Tonwertkartendaten;
Eingeben des skalierten Rohbildes in ein zweites KI-Modell (1732), das darauf trainiert ist, Merkmale eines Bildes zu analysieren;
Erhalten einer Vielzahl von Merkmalsbildern, die von dem zweiten KI-Modell (1732) ausgegeben werden, wobei die Vielzahl von Merkmalsbildern geometrischen Merkmalen im Rohbild zugeordnet sind;
Modifizieren der Vielzahl von Merkmalsbildern, die von dem zweiten KI-Modell (1732) ausgegeben werden, durch ein drittes KI-Modell (1733), basierend auf mindestens einer voreingestellten Einstellung zum Modifizieren von Merkmalen eines Bildes;
Erzeugen eines Ausgabebildes, das das Objekt umfasst, basierend auf der Vielzahl von Merkmalsbildern, die auf der Grundlage der mindestens einen Einstellung modifiziert wurden,
die unter Verwendung des zweiten Prozessors (1710) durchgeführt werden; und
Speichern des Ausgabebildes unter Verwendung des ersten Prozessors (1500),
wobei die mindestens eine voreingestellte Einstellung mindestens eine einer Einstellung für den Weißabgleich oder einer Einstellung für die Farbkorrektur umfasst.

2. Verfahren nach Anspruch 1, wobei das Erzeugen des Ausgabebildes das Eingeben der Vielzahl von modifizierten Merkmalsbildern in das dritte KI-Modell (1733) zur Erzeugung eines Ausgabebildes unter Verwendung des zweiten Prozessors (1710) umfasst.

3. Verfahren nach Anspruch 2, wobei das erste KI-Modell (1731) ein Modell ist, das so vortrainiert ist, dass es eine Tonwertkarte zur Skalierung der Helligkeit jedes Pixels des Rohbildes erzeugt,
wobei das zweite KI-Modell (1732) ein Modell ist, das so vortrainiert ist, dass es eine Vielzahl von voreingestellten Merkmalen in einem Bild zu analysiert,
wobei das dritte KI-Modell (1733) ein Modell ist, das so vortrainiert ist, dass es ein Ausgabebild aus einer Vielzahl von Merkmalsbildern regressiert.

4. Verfahren nach Anspruch 2, wobei das erste, zweite und dritte KI-Modell (1731, 1732, 1733) basierend auf einem Referenzrohbild und einem aus dem Referenzrohbild durch voreingestellte Bildsignalverarbeitung (ISP) erzeugten Referenzausgabebild gemeinsam trainiert werden.

5. Verfahren nach Anspruch 4, wobei das erste, zweite und dritte KI-Modell (1731, 1732, 1733) gemeinsam trainiert werden, basierend auf einem Verlust zwischen dem Referenzausgabebild, das durch voreingestellte ISP-Verarbeitung aus dem Referenzrohbild erzeugt wird, das durch Kombinieren einer Vielzahl von in einem Burst-Modus erzeugten Rohbildern erzeugt wird, und einem Ausgabebild, das durch das erste, zweite und dritte KI-Modell (1731, 1732, 1733) aus dem Referenzrohbild ausgegeben wird.

6. Verfahren nach Anspruch 1, wobei das Rohbild ein Bild ist, das durch einen Bildsensor und einen Farbfilter im Kamerasensor erzeugt wird, und ein beliebiges Muster aus einem Bayer-Muster, einem RGBE-Muster, einem RYYB-Muster, einem CYYM-Muster, einem CYGM-Muster, einem RGBW-Bayer-Muster und einem X-trans-Muster aufweist.

7. Verfahren nach Anspruch 2, wobei das erste, zweite und dritte KI-Modell (1731, 1732, 1733) unter Berücksichtigung der Präferenz eines Benutzers der Vorrichtung ausgewählt werden.

8. Verfahren nach Anspruch 2, ferner umfassend:
Erzeugen eines Echtzeit-Ansicht-Bildes aus dem Rohbild ohne Verwendung mindestens eines des ersten, zweiten oder dritten KI-Modells (1731, 1732, 1733); und
Anzeigen des erzeugten Echtzeit-Ansicht-Bildes.

9. Verfahren nach Anspruch 2, ferner umfassend ein erneutes Training des ersten, zweiten und dritten KI-Modells (1731, 1732, 1733).

10. Verfahren nach Anspruch 9, wobei das erneute Trainieren umfasst:
Erhalten eines Referenzbildes für das erneute Trainieren und eines Referenzrohbildes, das dem Referenzbild entspricht; und
erneutes Trainieren des ersten, zweiten und dritten KI-Modells (1731, 1732, 1733) unter Verwendung des erhaltenen Referenzbildes und des Referenzrohbildes.

11. Vorrichtung zur Erzeugung eines Ausgabebildes, in dem ein Objekt aus einem Rohbild erfasst wurde, wobei die Vorrichtung umfasst:
einen Kamerasensor (1400);
eine Anzeige (1200);
einen ersten Speicher (1600), in dem erste Anweisungen zum Steuern der Vorrichtung gespeichert sind;
einen ersten Prozessor (1500), der konfiguriert ist, um die ersten Anweisungen, die im ersten Speicher (1600) gespeichert sind, auszuführen;
einen zweiten Speicher (1720), in dem mindestens ein Modell (1730) der künstlichen Intelligenz (KI) zur Durchführung der Bildverarbeitung des Rohbildes und zweite Anweisungen, die sich auf die Ausführung des KI-Modells beziehen, gespeichert sind; und
einen zweiten Prozessor (1710), der so konfiguriert ist, dass er das mindestens eine KI-Modell und zweite Anweisungen ausführt, die im zweiten Speicher (1720) gespeichert sind,
wobei der erste Prozessor (1500) ferner konfiguriert ist, um ein Rohbild zu erhalten, das einem Objekt vor dem Kamerasensor entspricht, unter Verwendung des Kamerasensors (1400),
wobei der zweite Prozessor (1710) ferner konfiguriert ist, um das Rohbild, das dem Objekt vor dem Kamerasensor (1400) entspricht, in ein erstes KI-Modell einzugeben, das trainiert wurde, um für die Skalierung der Helligkeit eines Bildes verwendet zu werden,
wobei der zweite Prozessor (1710) ferner konfiguriert ist, um von dem ersten KI-Modell (1731) ausgegebene Tonwertkartendaten zu erhalten, wobei der zweite Prozessor (1710) konfiguriert ist, um die zweiten Anweisungen auszuführen zum:
Skalieren der Helligkeit des Rohbildes basierend auf den Tonwertkartendaten;
Eingeben des skalierten Rohbildes in ein zweites KI-Modell (1732), das darauf trainiert ist, Merkmale eines Bildes zu analysieren;
Erhalten einer Vielzahl von Merkmalsbildern, die von dem zweiten KI-Modell (1732) ausgegeben werden, wobei die Vielzahl von Merkmalsbildern geometrischen Merkmalen im Rohbild zugeordnet sind;
Modifizieren der Vielzahl von Merkmalsbildern, die von dem zweiten KI-Modell (1732) ausgegeben werden, durch ein drittes KI-Modell (1733), basierend auf mindestens einer voreingestellten Einstellung zum Modifizieren von Merkmalen eines Bildes; und
Erzeugen eines Ausgabebildes, das das Objekt umfasst, basierend auf der Vielzahl von Merkmalsbildern, die auf der Grundlage der mindestens einen Einstellung modifiziert wurden,
wobei der erste Prozessor (1500) konfiguriert ist, um in dem ersten Speicher (1600) das Ausgabebild zu speichern, und
wobei die mindestens eine voreingestellte Einstellung mindestens eine einer Einstellung für den Weißabgleich oder einer Einstellung für die Farbkorrektur umfasst.

12. Computerlesbares Aufzeichnungsmedium, auf dem ein Programm aufgezeichnet ist, das bei Ausführung auf einem Computer die Schritte des Verfahrens gemäß Anspruch 1 ausführt.

## Revendications

1. Procédé, exécuté par un dispositif, de génération d'une image de sortie dans laquelle un sujet a été capturé à partir d'une image brute, le procédé comprenant :
obtenir une image brute correspondant à un sujet se trouvant devant un capteur de caméra du dispositif en commandant le capteur de caméra, en utilisant un premier processeur (1500) configuré pour commander le dispositif ;
entrer l'image brute correspondant au sujet devant le capteur de caméra dans un premier modèle d'intelligence artificielle (IA) (1731) entraîné à être utilisé pour la mise à l'échelle de la luminosité d'une image, à l'aide d'un second processeur (1710) configuré pour effectuer un traitement d'image sur l'image brute à l'aide d'un modèle d'IA ;
obtenir des données de carte de tonalité issues du premier modèle d'IA (1731), en utilisant le second processeur (1710) ;
mettre à l'échelle la luminosité de l'image brute en se basant sur les données de carte de tonalité ;
entrer l'image brute mise à l'échelle à un second modèle d'IA (1732) entraîné à analyser les caractéristiques d'une image ;
obtenir une pluralité d'images de caractéristiques issue du second modèle d'IA (1732), la pluralité d'images de caractéristiques étant associée à des caractéristiques géométriques dans l'image brute ;
modifier, par un troisième modèle d'IA (1733), la pluralité d'images de caractéristiques issue du second modèle d'IA (1732), en se basant sur au moins un réglage prédéfini pour la modification des caractéristiques d'une image ;
générer une image de sortie comprenant le sujet, sur la base de la pluralité d'images de caractéristiques modifiées sur la base d'au moins un réglage,
qui sont exécutées à l'aide du second processeur (1710) ; et
stocker l'image de sortie à l'aide du premier processeur (1500),
dans lequel l'au moins un réglage prédéfini comprend au moins un d'un réglage pour l'ajustement de balance des blancs ou d'un réglage pour la correction des couleurs.

2. Procédé de la revendication 1, dans lequel la génération de l'image de sortie comprend l'entrée de la pluralité d'images de caractéristiques modifiées dans le troisième modèle d'IA (1733) pour générer une image de sortie, en utilisant le second processeur (1710).

3. Procédé de la revendication 2, dans lequel le premier modèle d'IA (1731) est un modèle pré-entraîné pour générer une carte de tonalité pour la mise à l'échelle de la luminosité de chaque pixel de l'image brute,
dans lequel le second modèle d'IA (1732) est un modèle pré-entraîné pour analyser une pluralité de caractéristiques prédéfinies dans une image,
dans lequel le troisième modèle d'IA (1733) est un modèle pré-entraîné pour régresser une image de sortie à partir d'une pluralité d'images de caractéristiques.

4. Procédé de la revendication 2, dans lequel les premier, second et troisième modèles d'IA (1731, 1732, 1733) sont entraînés ensemble en se basant sur une image brute de référence et, une image de sortie de référence générée à partir de l'image brute de référence par le biais d'un traitement de signal d'image (ISP) prédéfini.

5. Procédé de la revendication 4, dans lequel les premier, second et troisième modèles d'IA (1731, 1732, 1733) sont entraînés ensemble, en se basant sur une perte entre l'image de sortie de référence générée par le traitement ISP prédéfini à partir de l'image brute de référence générée par la combinaison d'une pluralité d'images brutes générées en mode rafale, et une image de sortie générée par les premier, second et troisième modèles d'IA (1731, 1732, 1733) à partir de l'image brute de référence.

6. Procédé de la revendication 1, dans lequel l'image brute est une image générée par un capteur d'image et un filtre de couleur dans le capteur de caméra, et présente un motif parmi un motif de Bayer, un motif RGBE, un motif RYYB, un motif CYYM, un motif CYGM, un motif de Bayer RGBW et un motif X-trans.

7. Procédé de la revendication 2, dans lequel les premier, second et troisième modèles d'IA (1731, 1732, 1733) sont sélectionnés en reflétant une préférence d'un utilisateur du dispositif.

8. Procédé de la revendication 2, comprenant en outre :
générer une image de vue en direct à partir de l'image brute, sans utiliser au moins un des premier, deuxième ou troisième modèles d'IA (1731, 1732, 1733) ; et
afficher l'image de vue en direct générée.

9. Procédé de la revendication 2, comprenant en outre le réentraînement des premier, second et troisième modèles d'IA (1731, 1732, 1733).

10. Procédé de la revendication 9, dans lequel le réentraînement comprend :
obtenir une image de référence pour le réentraînement et une image brute de référence correspondant à l'image de référence ; et
réentraîner les premier, deuxième et troisième modèles d'IA (1731, 1732, 1733), en utilisant l'image de référence obtenue et l'image brute de référence.

11. Dispositif pour générer une image de sortie dans laquelle un sujet a été capturé à partir d'une image brute, le dispositif comprenant :
un capteur de caméra (1400) ;
un affichage (1200) ;
une première mémoire (1600) stockant des premières instructions pour commander le dispositif ;
un premier processeur (1500) configuré pour exécuter les premières instructions stockées dans la première mémoire (1600) ;
une seconde mémoire (1720) stockant au moins un modèle d'intelligence artificielle (IA) (1730) pour effectuer un traitement d'image sur l'image brute, et des secondes instructions relatives à l'exécution du modèle d'IA ; et
un second processeur (1710) configuré pour exécuter l'au moins un modèle d'IA et des secondes instructions stockées dans la seconde mémoire (1720),
dans lequel le premier processeur (1500) est en outre configuré pour obtenir une image brute correspondant à un sujet se trouvant devant le capteur de caméra en utilisant le capteur de caméra (1400),
dans lequel le second processeur (1710) est en outre configuré pour entrer l'image brute correspondant au sujet devant le capteur de caméra (1400) à un premier modèle d'IA entraîné à être utilisé pour la mise à l'échelle de la luminosité d'une image,
dans lequel le second processeur (1710) est en outre configuré pour obtenir des données de carte de tonalité issues du premier modèle d'IA (1731), le second processeur (1710) étant configuré pour exécuter les secondes instructions pour :
mettre à l'échelle la luminosité de l'image brute en se basant sur les données de carte de tonalité ;
entrer l'image brute mise à l'échelle à un second modèle d'IA (1732) entraîné à analyser les caractéristiques d'une image ;
obtenir une pluralité d'images de caractéristiques issue du second modèle d'IA (1732), la pluralité d'images de caractéristiques étant associée à des caractéristiques géométriques dans l'image brute ;
modifier, par un troisième modèle d'IA (1733), la pluralité d'images de caractéristiques issue du second modèle d'IA (1732), en se basant sur au moins un réglage prédéfini pour la modification des caractéristiques d'une image ; et
générer une image de sortie comprenant le sujet, sur la base de la pluralité d'images de caractéristiques modifiées sur la base d'au moins un réglage,
dans lequel le premier processeur (1500) est configuré pour stocker, dans la première mémoire (1600), l'image de sortie, et
dans lequel l'au moins un réglage prédéfini comprend au moins un d'un réglage pour l'ajustement de balance des blancs ou d'un réglage pour la correction des couleurs.

12. Support d'enregistrement lisible par ordinateur sur lequel est enregistré un programme qui, lorsqu'il est exécuté sur un ordinateur, met en œuvre les étapes du procédé selon la revendication 1.
